# EUROPÄISCHE PATENTANMELDUNG

(11) **EP 0 752 494 A1**
(43) Veröffentlichungstag der Anmeldung: **08.01.1997**
(21) Anmeldenummer: 96109918.1
(22) Anmeldetag: 20.06.1996
(51) Int. Cl.: D06P 1/41, C09B 23/14, C09B 44/10, C09B 23/16, C09B 26/04, C09B 57/00

(54) **Verfahren zum Reduzieren der Toxizität von Restflotten und neue kationische Farbstoffe**

(30) Priorität: 03.07.1995 DE 19524134
(71) Anmelder: BAYER AG, 51368 Leverkusen (DE)
(72) Erfinder: Giera, Henry, Dr., 51429 Bergisch Gladbach (DE); Reichel, Felix, Dr., 51465 Bergisch Gladbach (DE); Berneth, Horst, Dr., 51373 Leverkusen (DE); Böcker, Thomas, Dr., 42799 Leichlingen (DE); Hassenrück, Karin, Dr., Mt. Pleasant, SC 29464 (US); Lange, Karl, Dr., Kitakyushu, Fukuoka, 806 (JP); Meisel, Karlheinrich, Dr., 51519 Odenthal (DE)

(57) **Zusammenfassung**

Es wurde gefunden
1) ein Verfahren zum Reduzieren der Toxizität von Restflotten aus dem Färben mit kationischen Farbstoffen oder Mischungen davon, dadurch gekennzeichnet, daß man mit kationischen Farbstoffen färbt, die eine berechnete elektrostatische Abschirmungsenergie (idealisierte Hydratationsenergie) von ≧50 kcal/mol aufweisen,
2) kationische, in der Regel mindertoxische Farbstoffe, deren Herstellung und Verwendung zum Färben.

## Beschreibung

Kationische Farbstoffe werden seit langem zum Färben geeigneter natürlicher und synthetischer Materialien verwendet. Solche kationisch färbbaren Materialien sind beispielsweise Papier, Leder, Seide, tannierte Baumwolle oder andere Cellulosematerialien, Polymerisate und Mischpolymerisate des Acrylnitrils oder Dicyanoethylens oder sauer modifiziertes Polyester oder Polyamid, wobei hierbei sämtliche Formen wie Flocken, Fasern, Fäden, Gewebe, Gewirke oder nichtgewebte Vliese gemeint sein sollen.

Die zum Färben dieser Materialien eingesetzten kationischen Farbstoffe zeichnen sich in der Regel durch hohe Farbstärke, Brillanz und einen hohen Ausziehgrad auf das zu färbende Material aus. Diese Eigenschaften machen sie gegenüber anderen Farbstofftypen überlegen, so daß sie durch diese nur schwierig und mit technischen Einbußen ersetzt werden könnten.

Kationische Farbstoffe besitzen jedoch in der Regel eine hohe Toxizität gegenüber Lebewesen, vor allem gegenüber Wasserlebewesen. Stellvertretend für Wasserlebewesen seien Fische (Wirbeltiere), Daphnien (Krebse) und Algen (Pflanzen) genannt.

Wegen dieser hohen Toxizität sind trotz des hohen Ausziehgrads dieser Farbstoffe die ausgezehrten Färbeflotten unverdünnt oder mäßig verdünnt ohne weitere Nachbehandlungen nicht geeignet, in Oberflächengewässer eingeleitet zu werden. Weiterhin kann beispielsweise durch unfallbedingte Verunreinigung von Gewässern mit solchen Farbstoffen deren Ökosystem beeinträchtigt werden.

Es bestand demnach die Aufgabe, weniger toxische kationische Farbstoffe bereitzustellen, die gleich gute anwendungstechnische Eigenschaften wie die bekannten aufweisen. Hierfür zeigte es sich als besonders hinderlich, daß die Toxizität gegen Fische, Daphnien und Algen offenbar in allen bekannten Klassen kationischer Farbstoffe sehr hoch ist und vom Farbstofftyp weitgehend unabhängig ist. Aus der Literatur waren keine Zusammenhänge zwischen strukturellen Merkmalen und der Toxizität bekannt.

Es wurde nun überraschenderweise gefunden, daß zwischen der berechneten idealisierten Hydratationsenergie der kationischen Farbstoffe und ihrer Toxizität gegenüber Fischen, Daphnien und Algen ein (logarithmischer) Zusammenhang besteht, der es erlaubt, gezielt mindertoxische Farbstoffe auszuwählen und zu synthetisieren.

Die idealisierte Hydratationsenergie der kationischen Farbstoffe wurde nicht experimentell, sondern nach einem Computerrechenverfahren ermittelt. Diese sog. COSMO-Energie wurde an konformationsoptimierten Molekülstrukturen mit dem aus "Klamt, Schüürmann, J. Chem. Soc. Perkin II, 1993, 799" bekannten Rechenverfahren berechnet. Ganz analog lassen sich aber auch andere Rechenmodelle einsetzen, wie z. B. in "Tomas, Persico, Chem. Rev. 1994, 94, 2027" oder "Cramer, Truhlar, Reviews in Computational Chemistry, New York, Vol.6" beschrieben. Die Konformationsoptimerung wurde nach dem semiempirischen AM1-Verfahren mit dem Programm MOPAC durchgeführt ("J.P. Stewart, Quant. Chem. Prog. Exch., 10:86, 1990").

Als Maß für die Toxizität wurde hier der Wert der letalen (bei Fischen) oder effektiven (bei Daphnien) Konzentration in Wasser ausgewählt, bei dem 50% der Tiere nach Ablauf des Tests gestorben sind bzw. sich nicht mehr bewegen (LCF₅₀ bzw. ECD₅₀). Die Testdauer betrug 96 Stunden bei Fischen und 48h bei Daphnien. Die Wirkung auf Algen wurde im Zellvermehrungshemmtest untersucht. Die Testdauer betrug 72 Stunden. Als Maß für die Toxizität wurde die effektive Konzentration in Wasser ausgewählt, bei der die Wachstumsrate 50% der ohne Wirksubstanz beträgt (ECA₅₀). Es zeigte sich nun, daß weitgehend unabhängig von der Strukturklasse der kationischen Farbstoffe die Toxizität gegenüber Fischen, Daphnien und Algen > 15 bis 20 µmol/l liegt, wenn die Hydratationsenergie COSMO ≧50 kcal/mol, vorzugsweise >55 kcal/mol liegt. Eine Konzentration von 15 bis 20 µmol/l entspricht bei Molekulargewichten (inclusive Anion) typischer kationischer Farbstoffe von 500 bis 650 g/mol einer Konzentration von ca. 10 mg/l.

Gegenstand der Erfindung ist demnach ein Verfahren zum Reduzieren der Toxizität von Restflotten aus dem Färben mit kationischen Farbstoffen oder Mischungen davon, dadurch gekennzeichnet, daß man mit kationischen Farbstoffen färbt, die eine berechnete elektrostatische Abschirmungsenergie (idealisierte Hydratationsenergie) von ≧50 kcal/mol, insbesondere von mehr als 55 kcal/mol, aufweisen.

Um COSMO-Energien (idealisierte Hydratationsenergien) oberhalb der angegebenen Grenzen zu erreichen, müssen die Farbstoffe hydrophile Reste tragen. Da die Wirkung der einzelnen hydrophilen Reste unterschiedlich ist, hängt die Gesamtzahl der für ein Überschreiten der Grenzen erforderlichen Reste von deren Typ ab. Auch ihre Position im Molekül hat einen gewissen Einfluß auf die Wirkung. Insgesamt läßt sich jedoch sagen, daß mit mindestens zwei hydrophilen Resten im Farbstoffmolekül in der Regel COSMO-Werte oberhalb der angegebenen Grenzen erreicht werden.

Ein besonderer Gegenstand der Erfindung ist demnach ein Verfahren zum Reduzieren der Toxizität von Restflotten, dadurch gekennzeichnet, daß man als kationische Farbstoffe solche einsetzt, die mindestens zwei hydrophile Reste tragen.

Unter hydrophilen Resten im Sinne der Erfindung sind solche gemeint, die polare Gruppen tragen. Solche polaren Gruppen enthalten im allgemeinen Heteroatome wie Sauerstoff, Stickstoff, Fluor und/oder Schwefel.

Diese polaren Reste können entweder direkt an das Farbstoffmolekül gebunden sein oder aber über Abstandsgruppen, beispielsweise Alkylen- oder Arylenreste.

Die polaren Gruppen entstammen vorzugsweise den Reihen Perfluor-C₁- bis -C₄-alkyl, C₁- bis C₃-Alkoxy, Cyano, Nitro, SO₂, C=O, Hydroxy, NH und -O-. Sie können auch untereinander kombiniert werden beispielsweise zu Hydroxycarbonyl, Alkoxysulfonyl, Alkanoylamino, Perfluoralkylsulfonylamino, usw. SO₂, C=O, NH und -O- können auch Bestandteile von Ringen sein, beispielsweise Tetrahydrothiophen-1,1-dioxid (Tetramethylensulfon).

In einigen Fällen ist es erforderlich zur Optimierung anwendungstechnischer Eigenschaften wie Ziehvermögen oder Kombinierbarkeit, durch Einbau von hydrophoben, vorzugsweise cyclischen Resten gegenzusteuern. Als vorteilhaft haben sich hier insbesondere aromatische Reste, Cycloalkylreste und gesättigte heterocyclische Reste herausgestellt. Als Beispiele seien genannt: Phenyl, Tolyl, Benzyl, Phenethyl, Cyclopentyl, Cyclohexyl, Pyrrolidino, Piperidino. Sie können auch mit den polaren Gruppen kombiniert werden, beispielsweise zu Benzoylamino.

Werden nun solche erfindungsgemäßen kationischen Farbstoffe oder Mischungen davon unter üblichen Färbebedingungen eingesetzt, so erhält man ein Färbereiabwasser, das unverdünnt oder mäßig verdünnt beim Einleiten in Oberflächengewässer keinen akuten Schaden bei Wasserlebewesen wie Fischen und Daphnien bewirkt.

### Beispiele:

### Beispiele 1 bis 66:

Die nachfolgenden Beispiele zeigen für eine Vielzahl verschiedener Farbstoffe die berechneten COSMO-Hydratationsenergien in kcal/mol (=COSMO) und die für die Farbstoffe gemessenen Toxizitäten gegenüber Fischen (LCF₅₀), Daphnien (ECD₅₀) und Algen (ECA₅₀) jeweils in mg/l. Die Ermittlung dieser Werte erfolgte so wie es in der vorstehenden Beschreibung angegeben ist. Zusätzlich ist in Spalte "HP" jeweils die Anzahl der pro Molekül vorhandenen hydrophilen Reste und in Spalte "EV" angegeben, ob es sich um ein erfindungsgemäßes Beispiel (=E) oder ein Vergleichsbeispiel (=V) handelt.

Es ist klar zu erkennen, daß Farbstoffe mit COSMO-Hydratationsenergie von über 50 kcal/mol deutlich weniger toxisch sind als Farbstoffe mit COSMO-Hydratationsenergien von weniger als 50 kcal/mol. Außerdem ist zu erkennen, daß die Toxizität der Farbstoffe mit zunehmender Anzahl pro Molekül vorhandener hydrophilen Reste abnimmt.

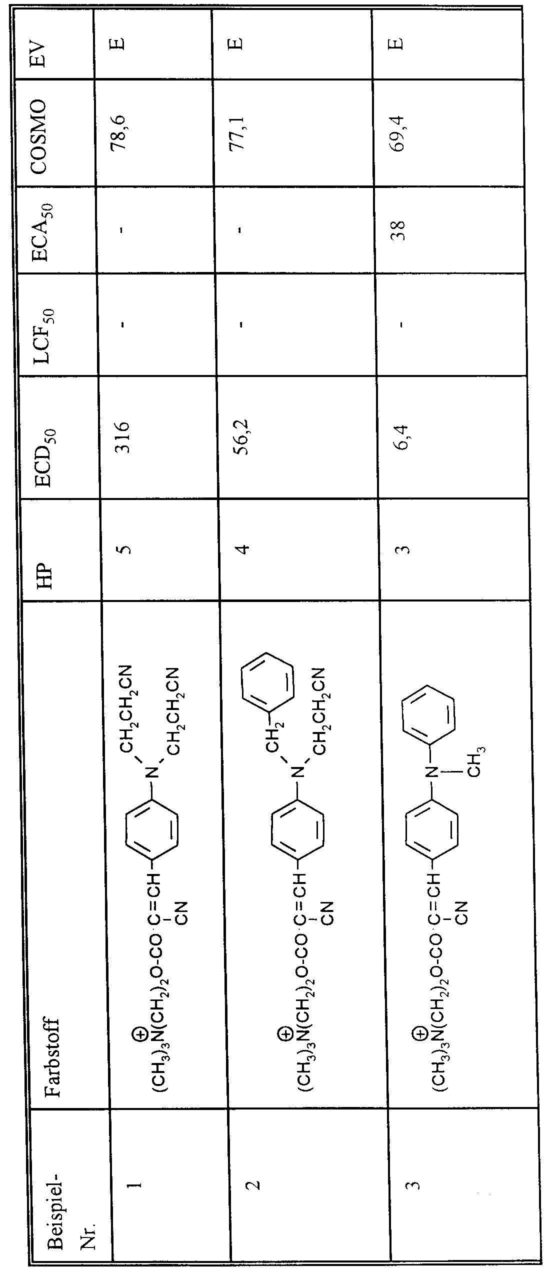

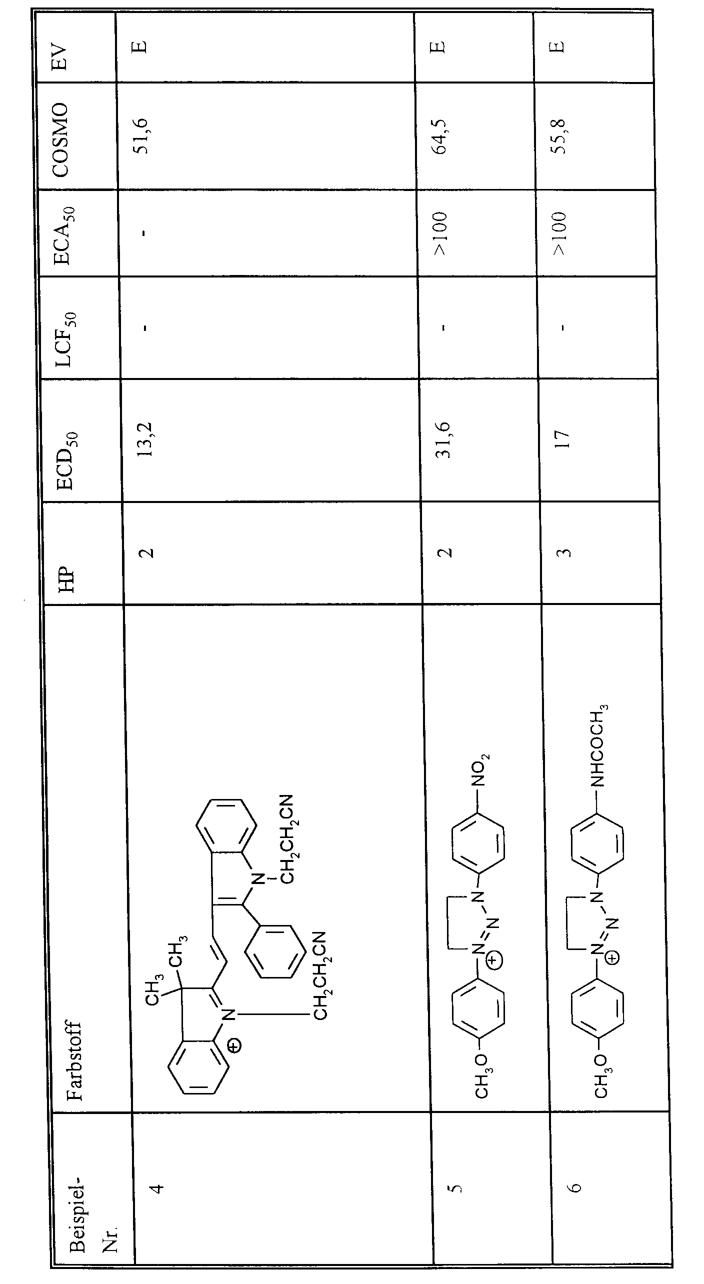

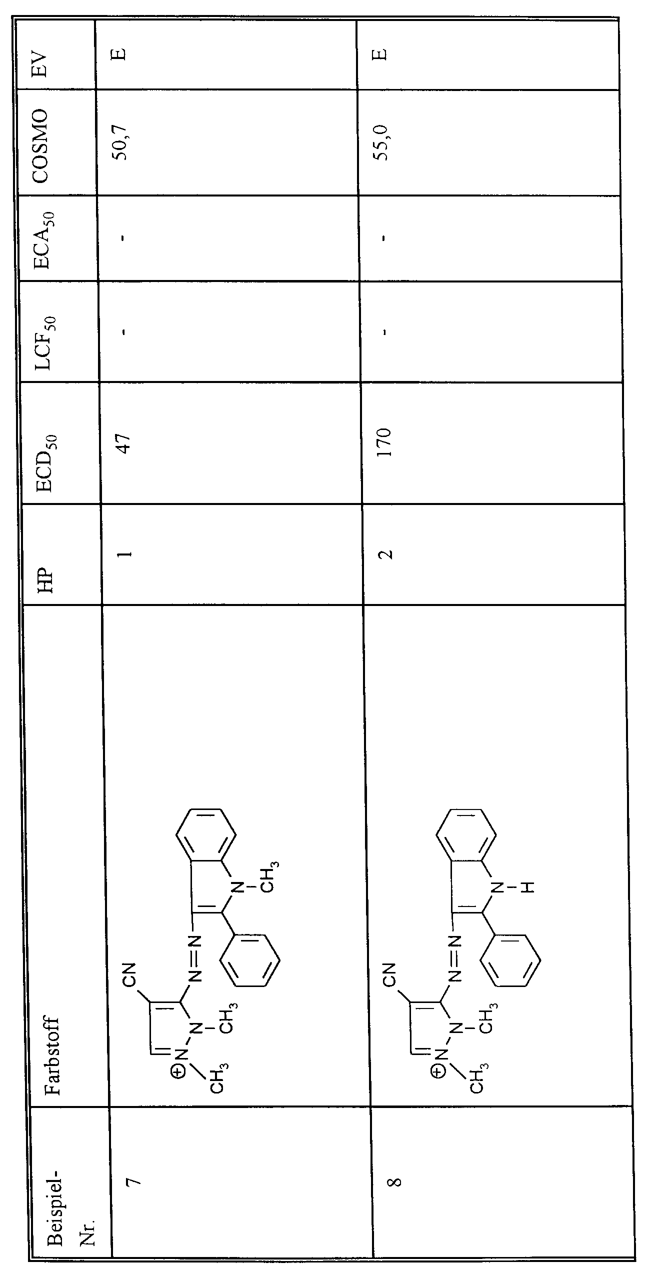

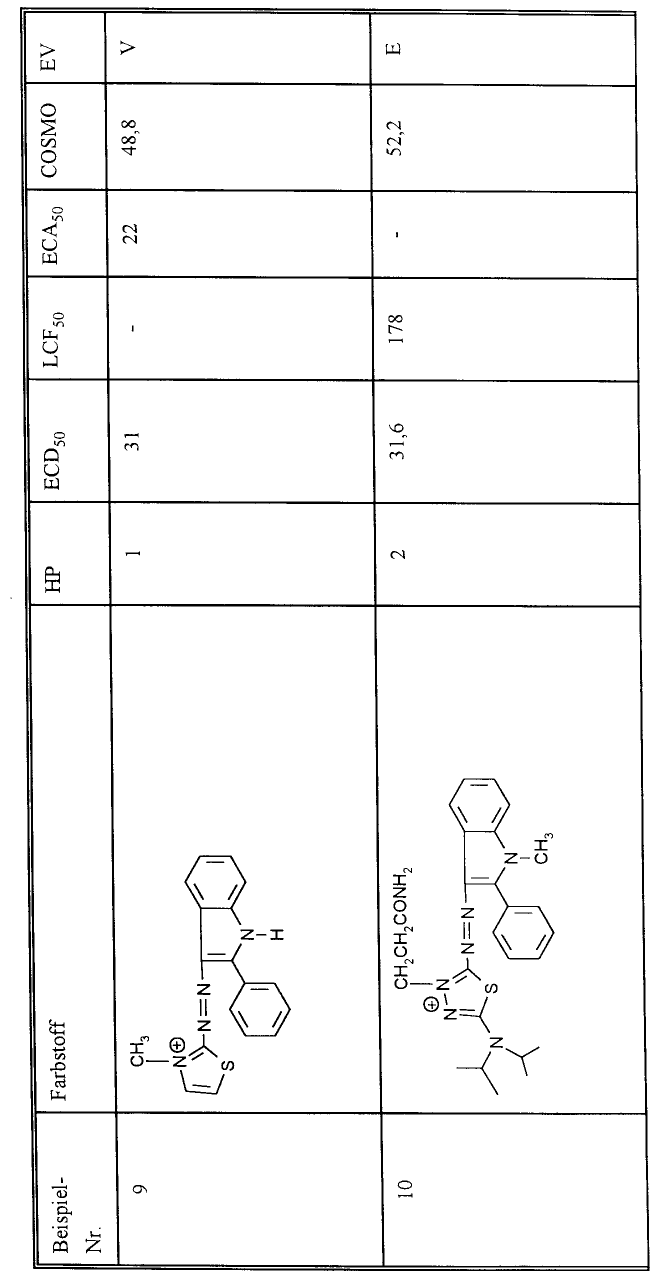

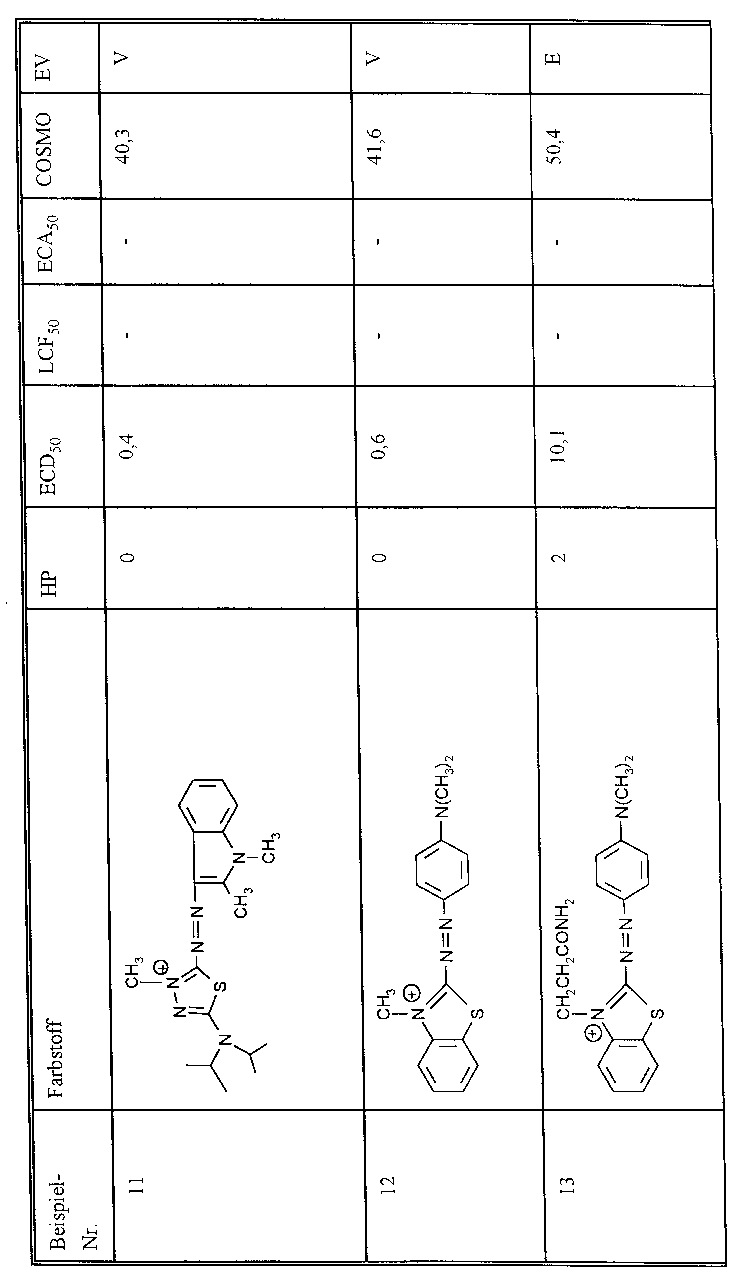

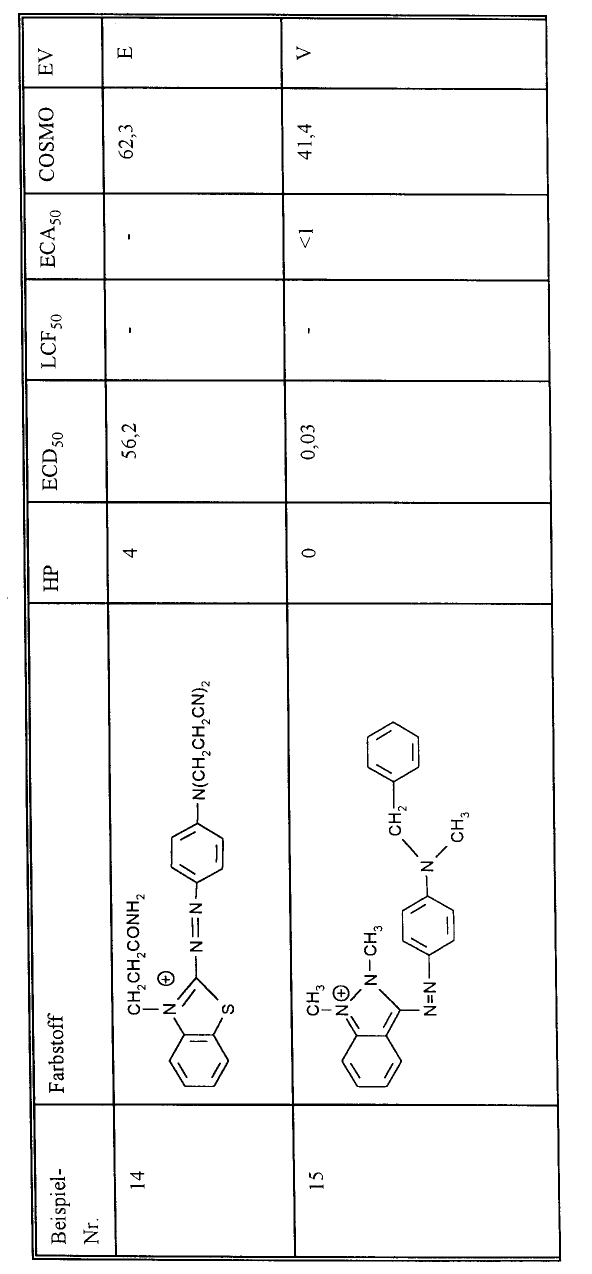

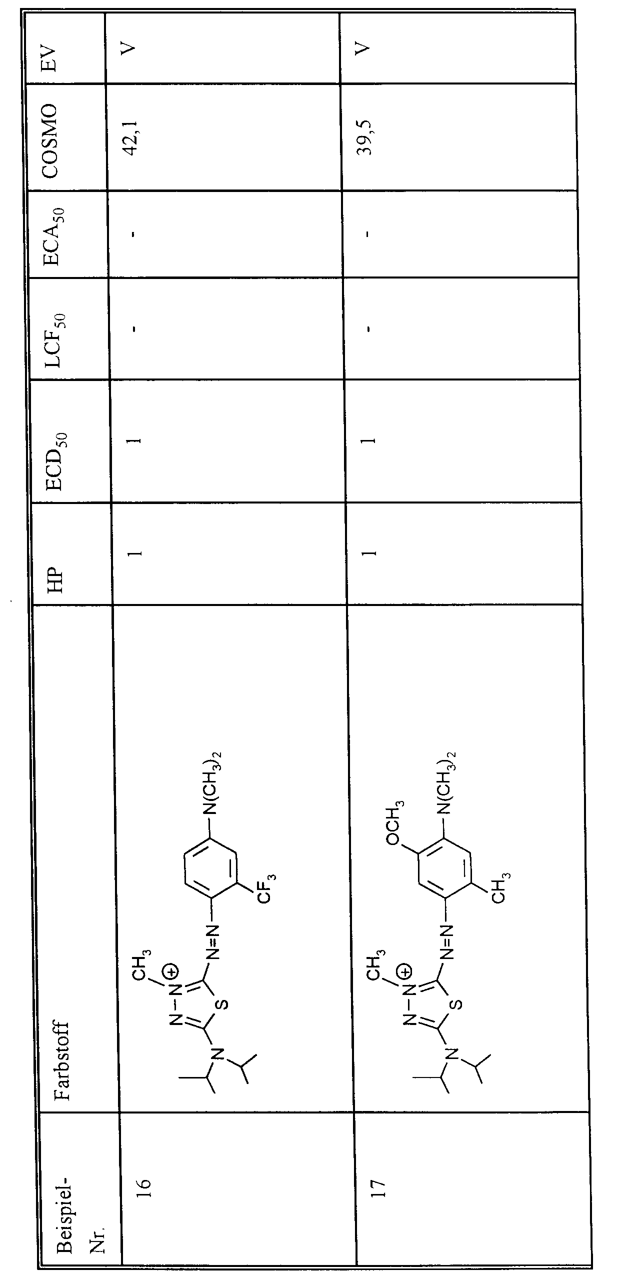

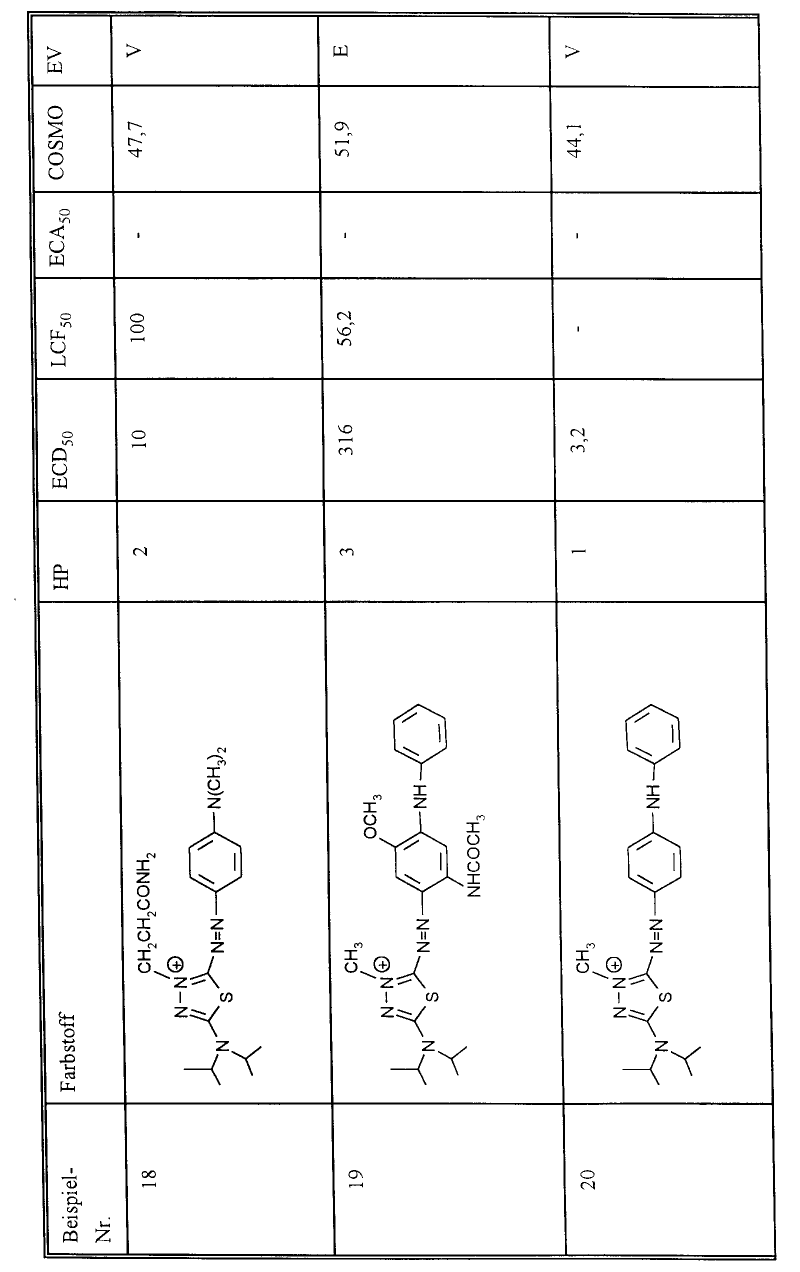

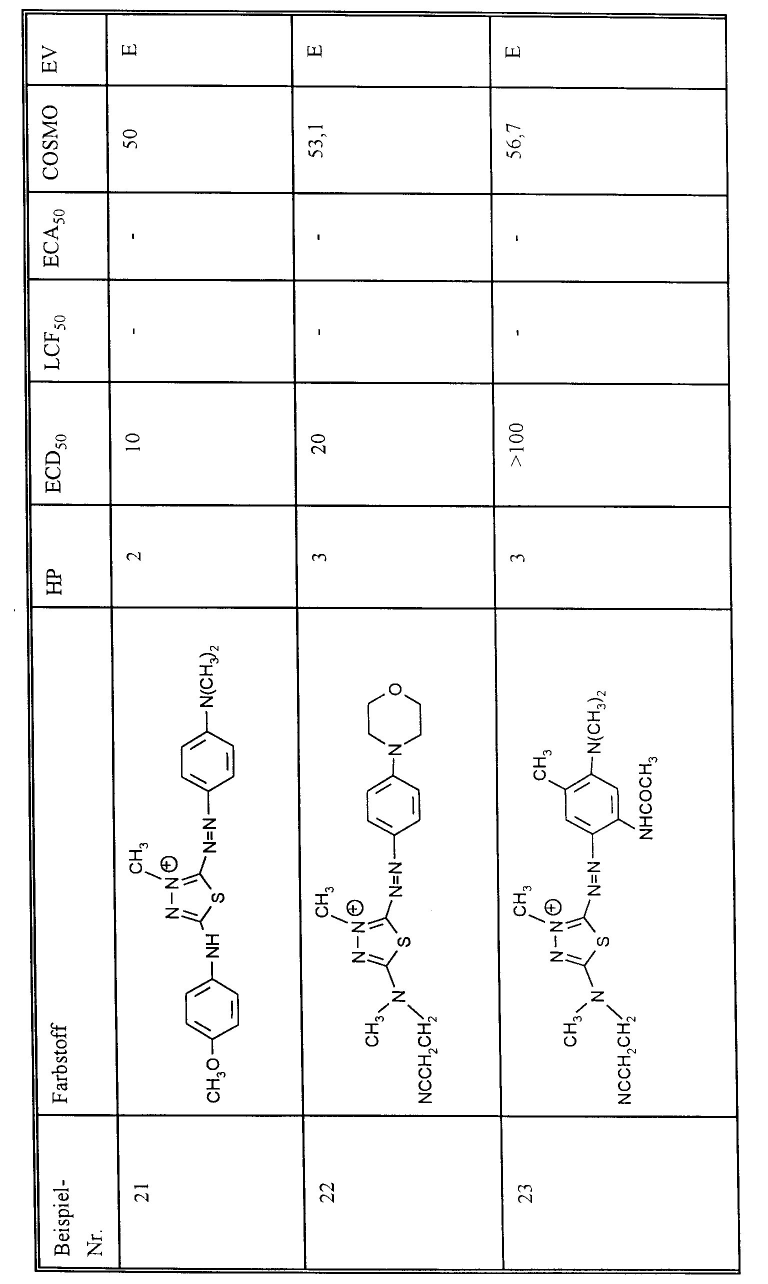

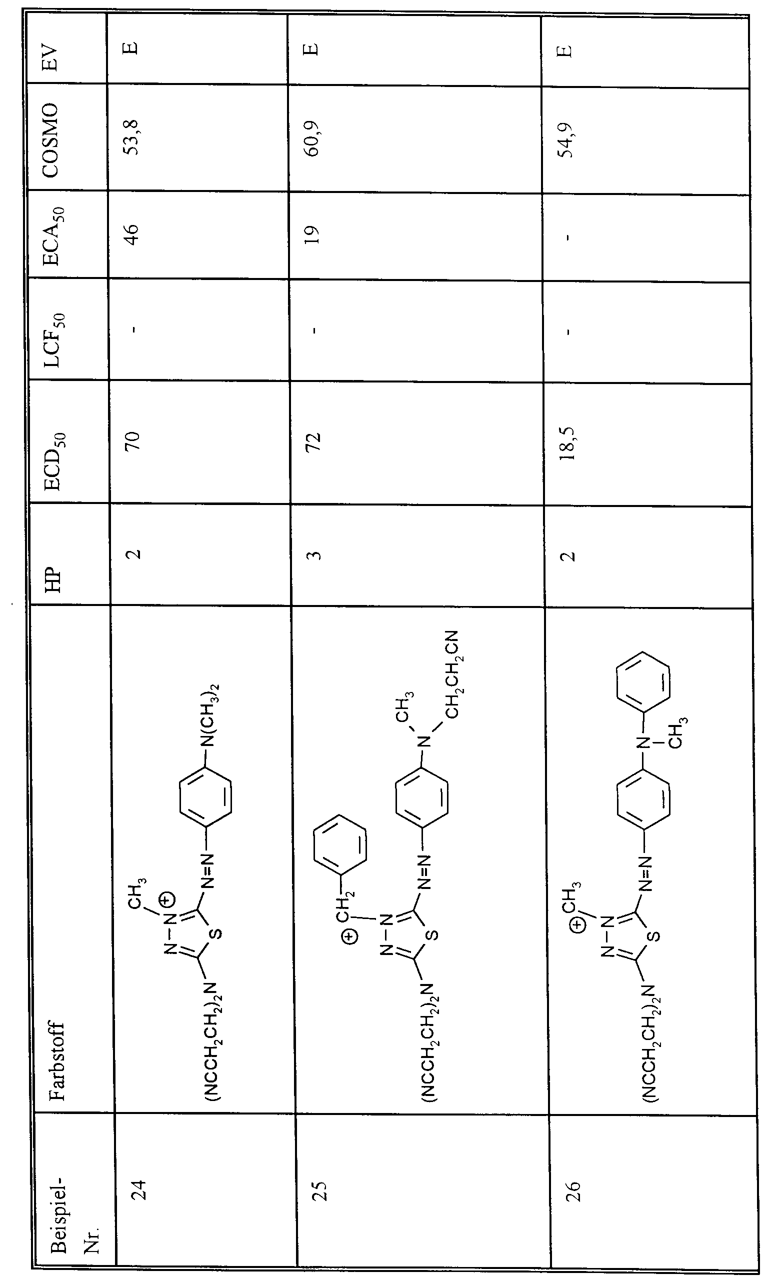

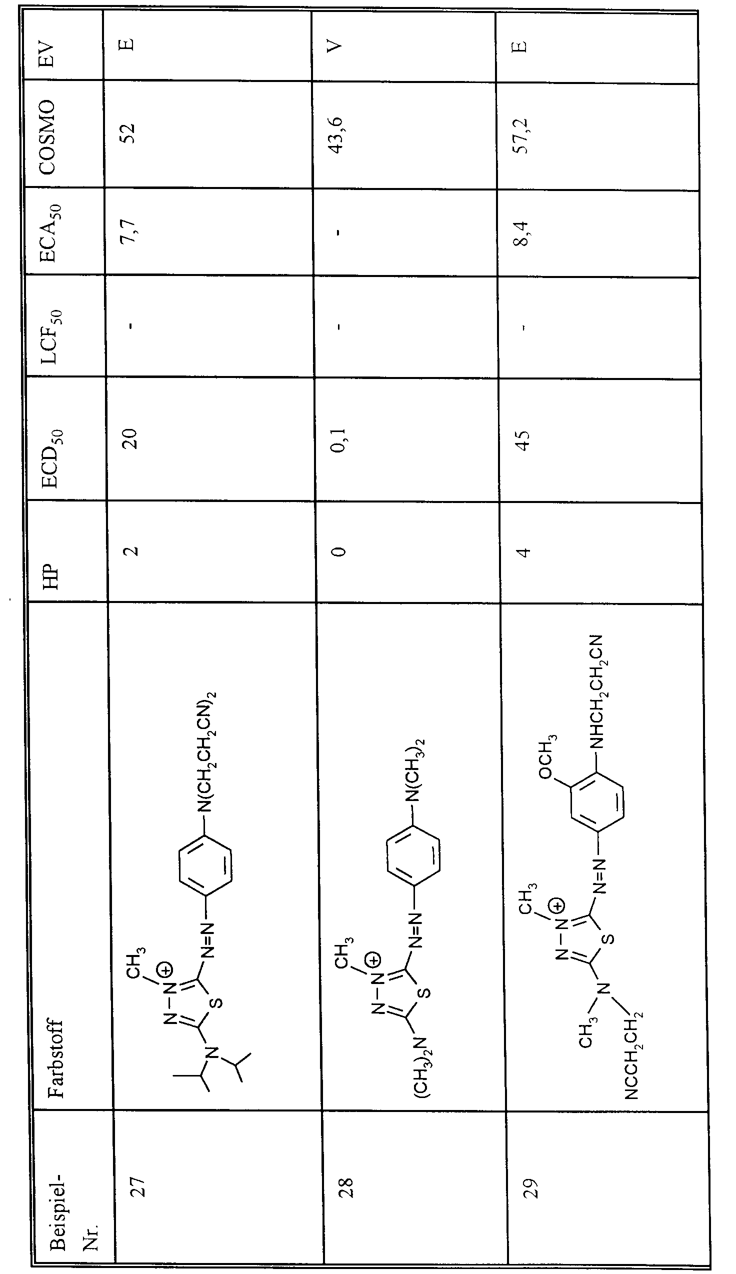

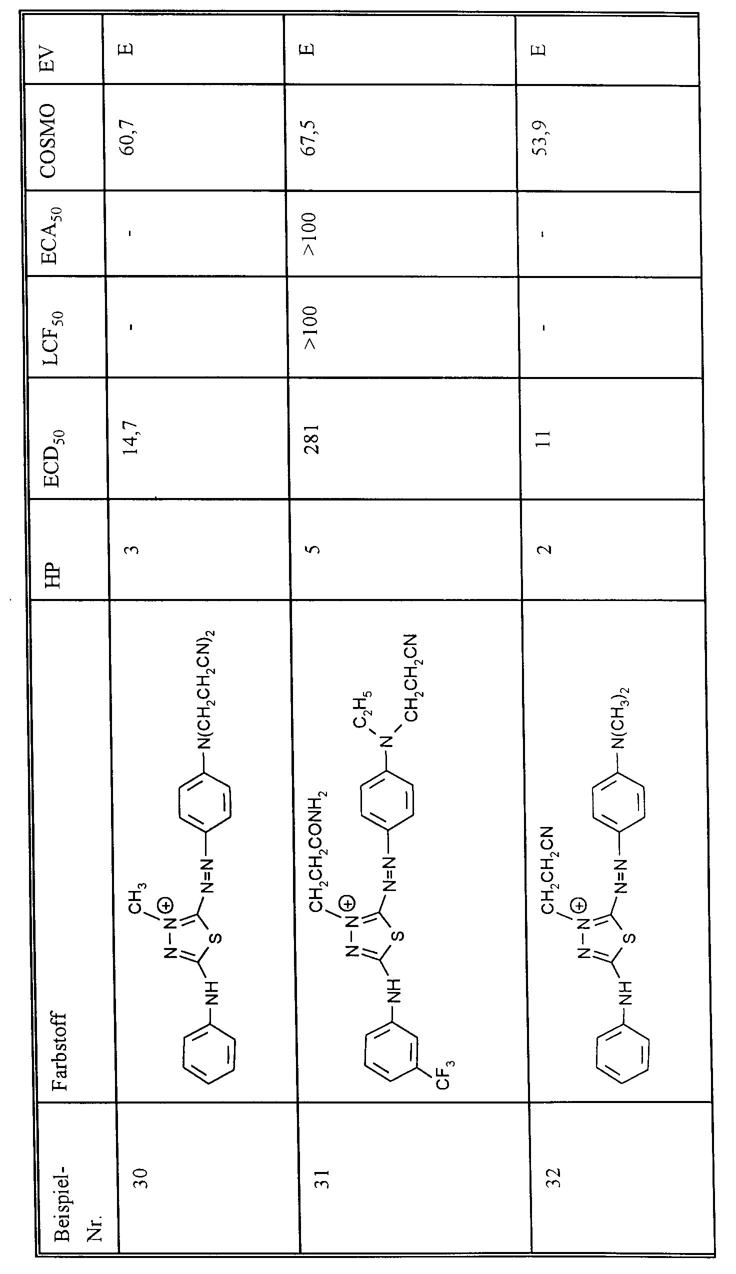

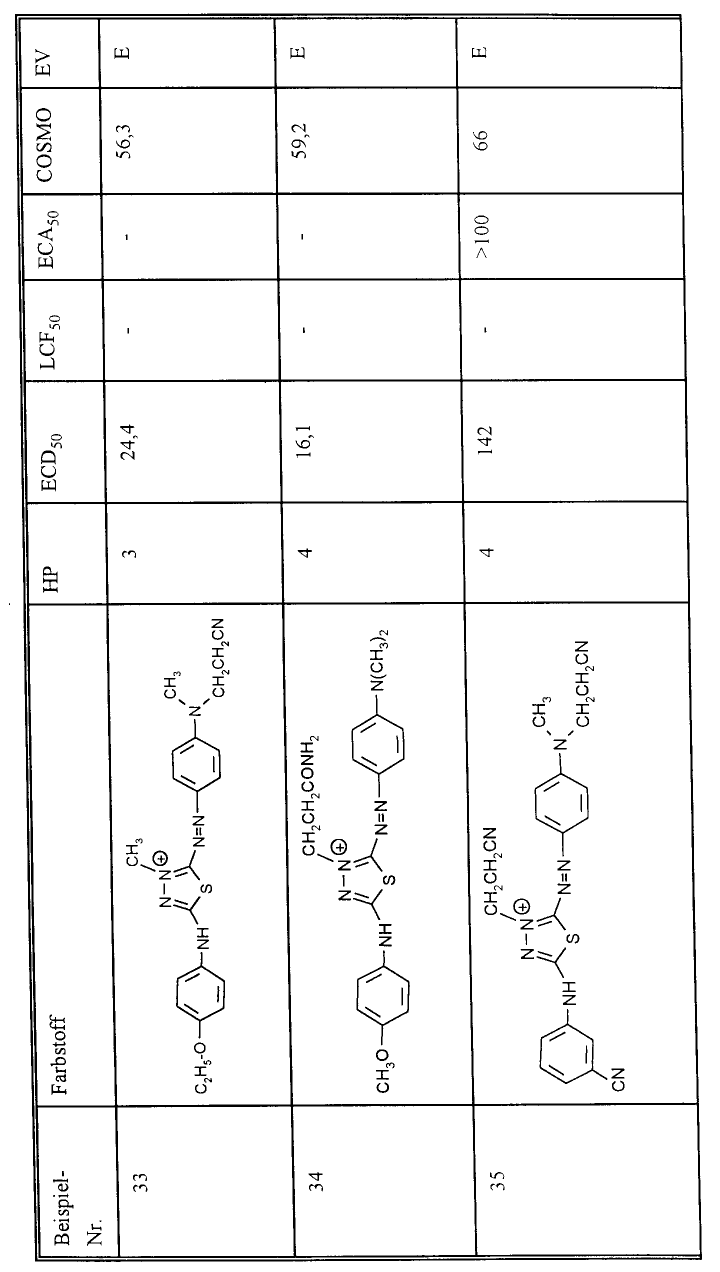

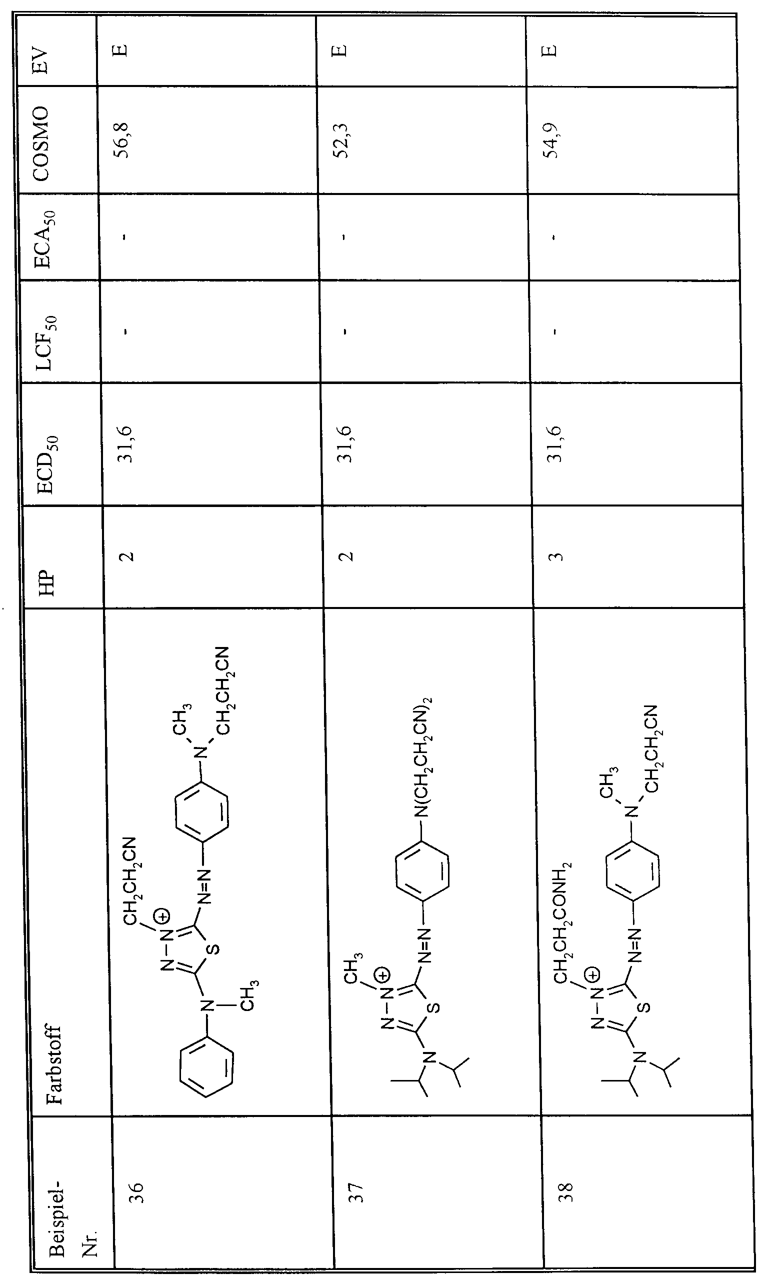

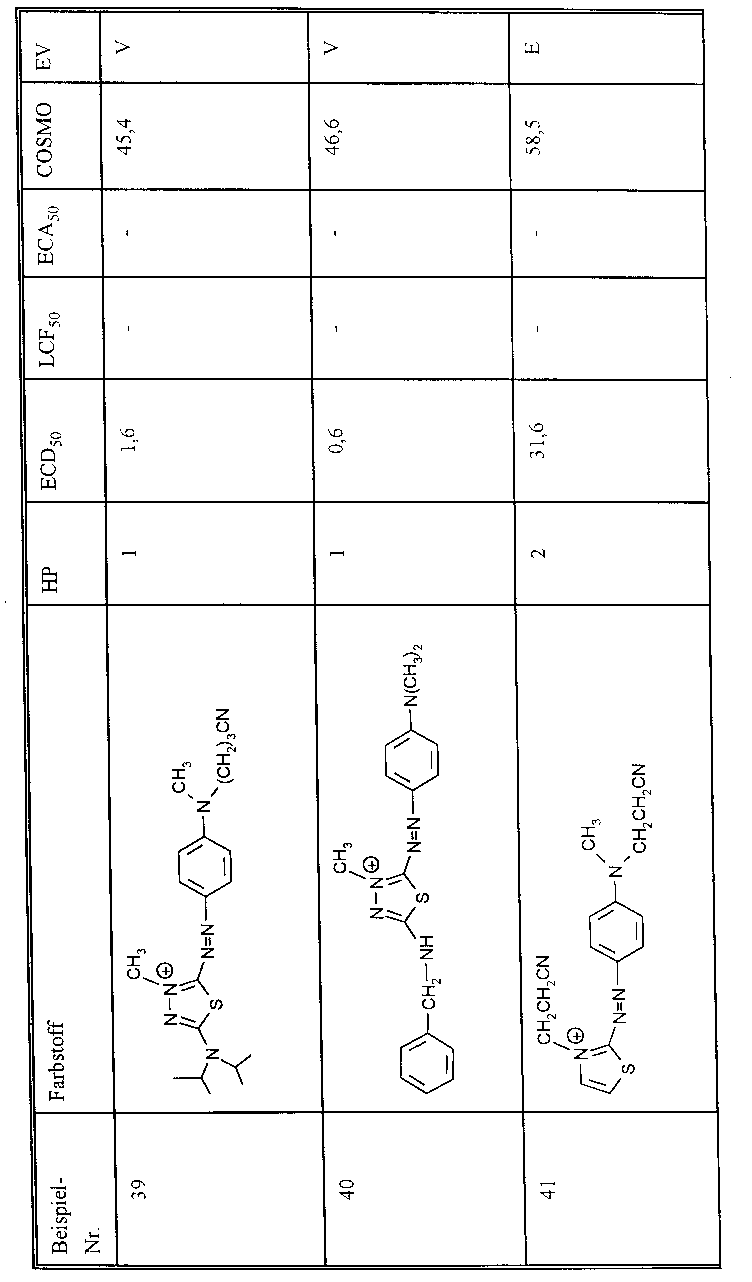

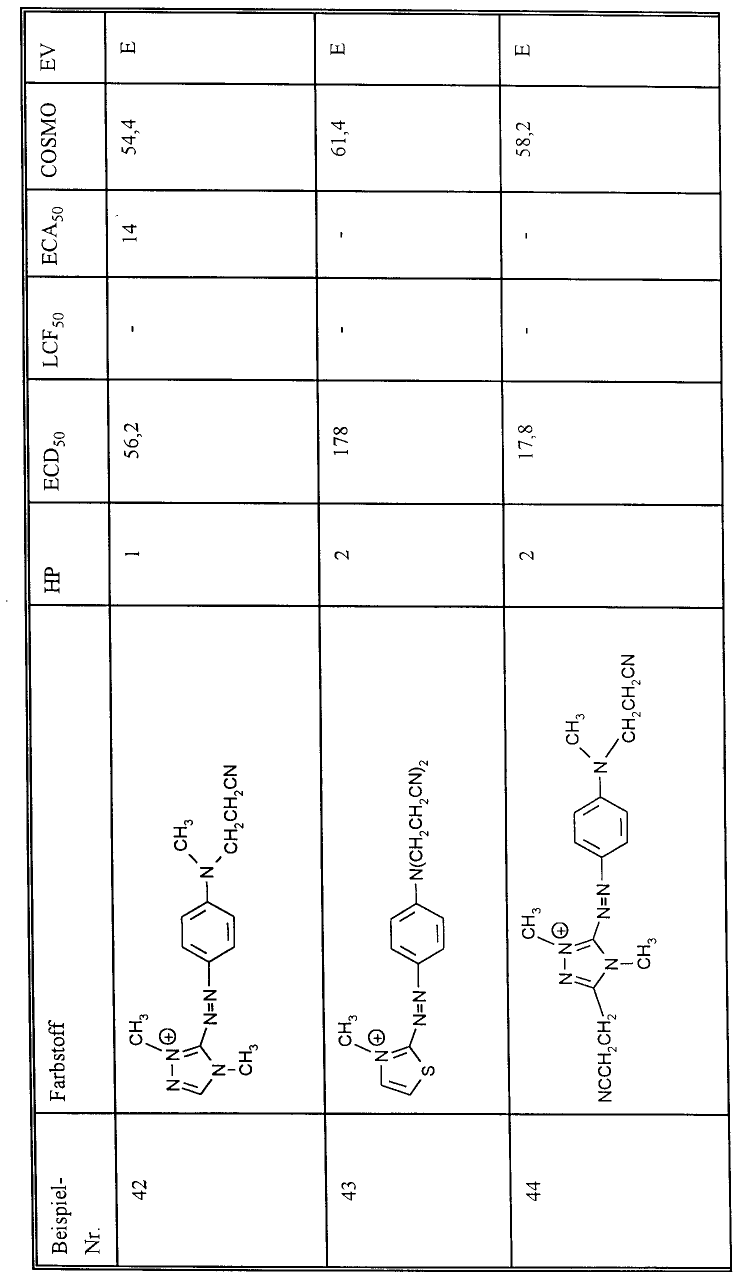

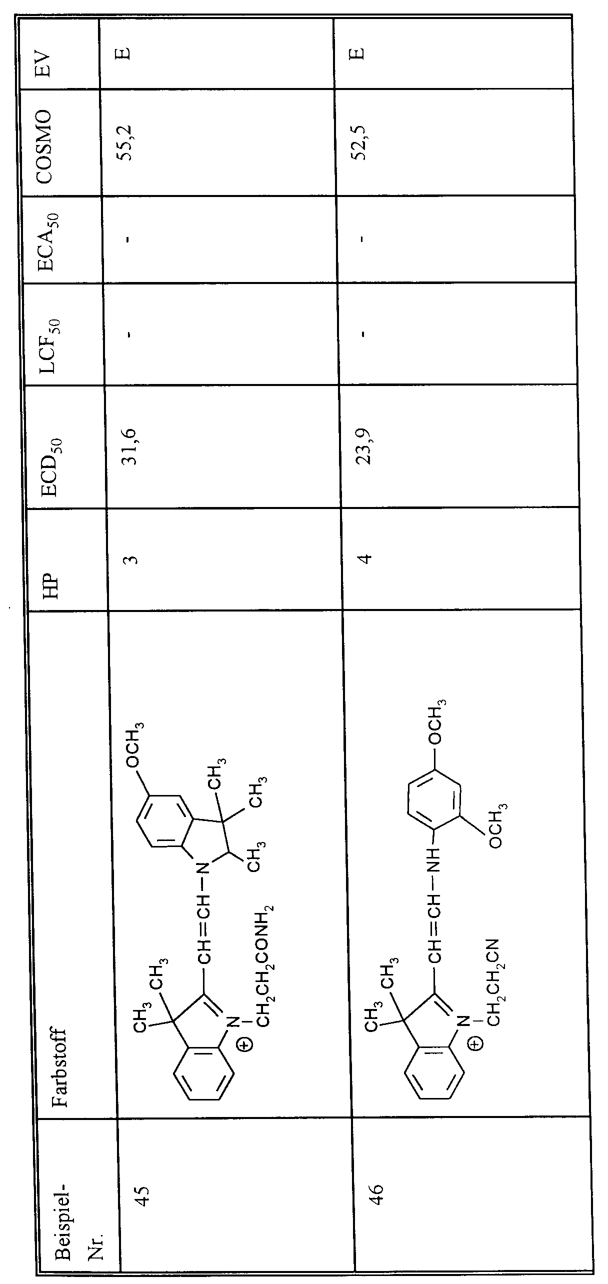

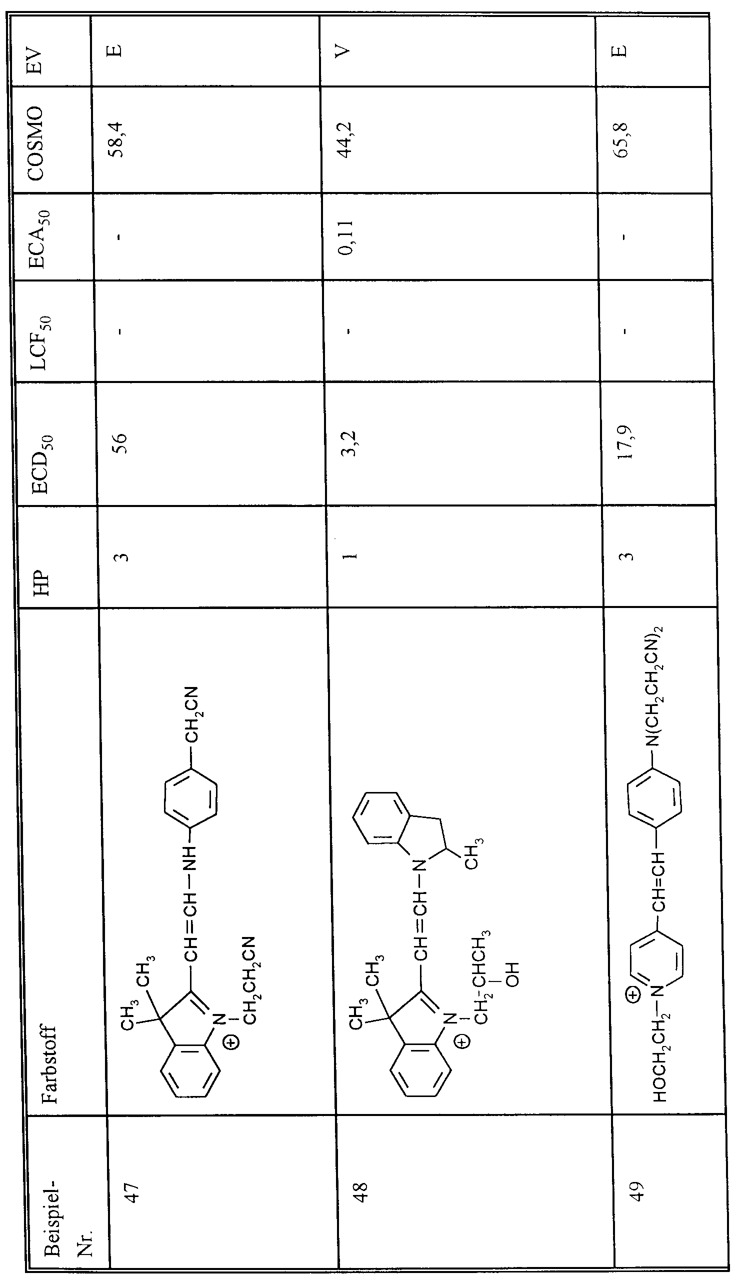

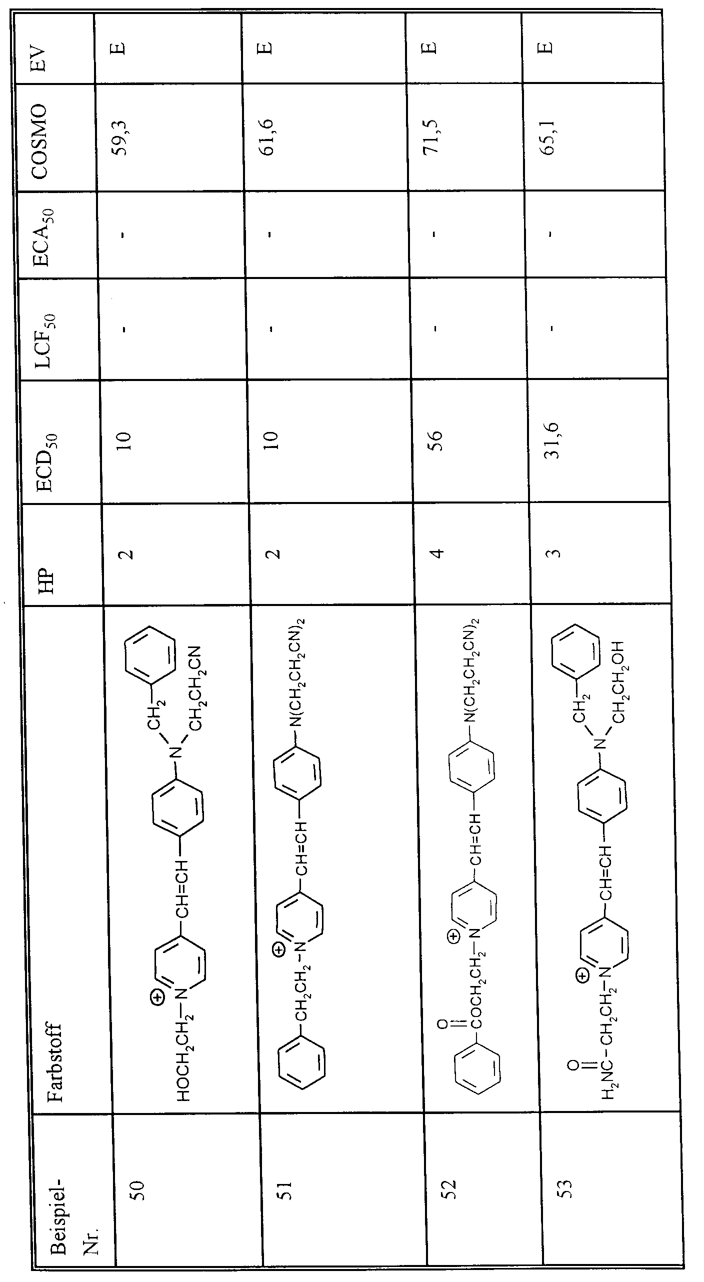

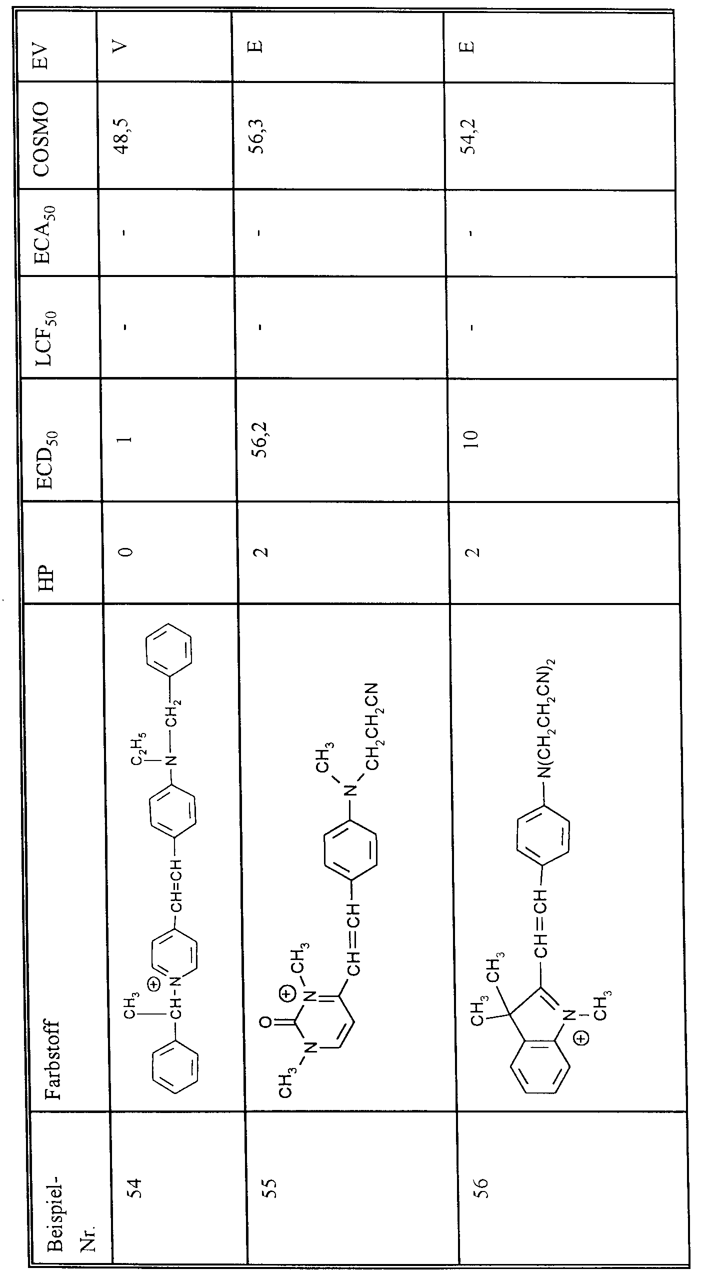

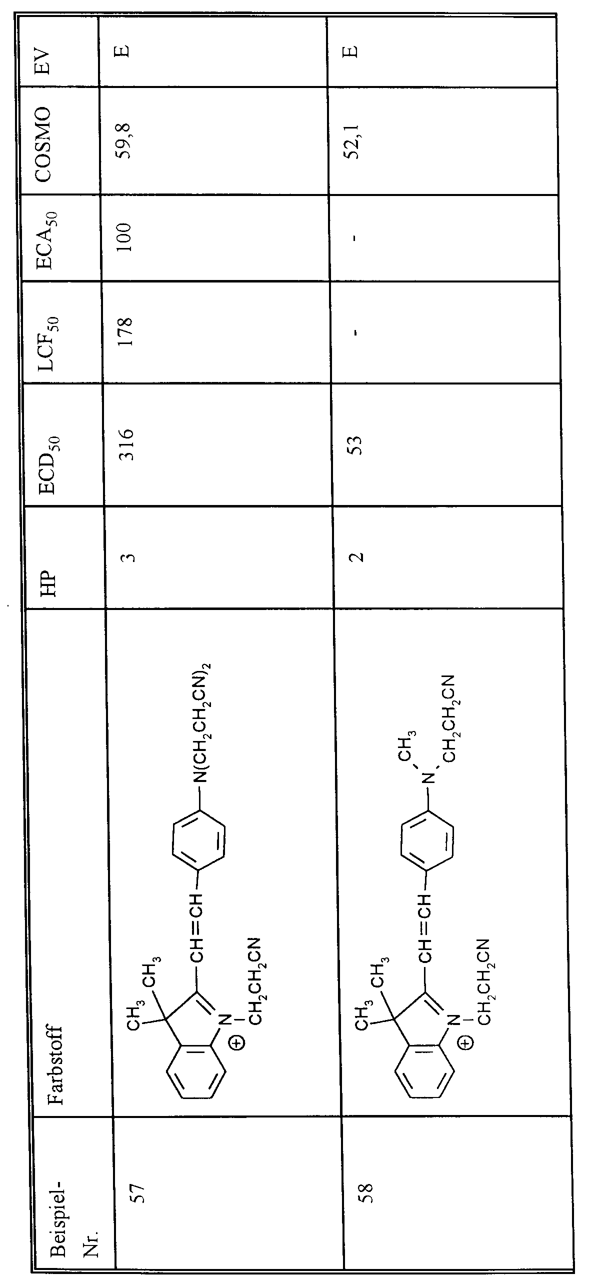

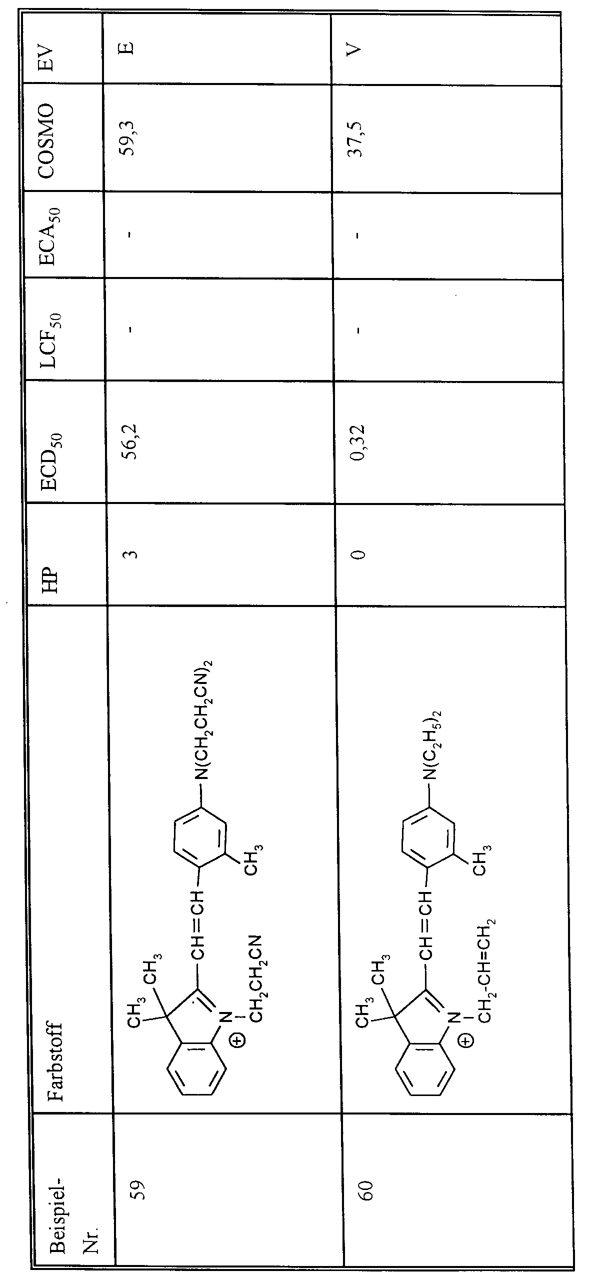

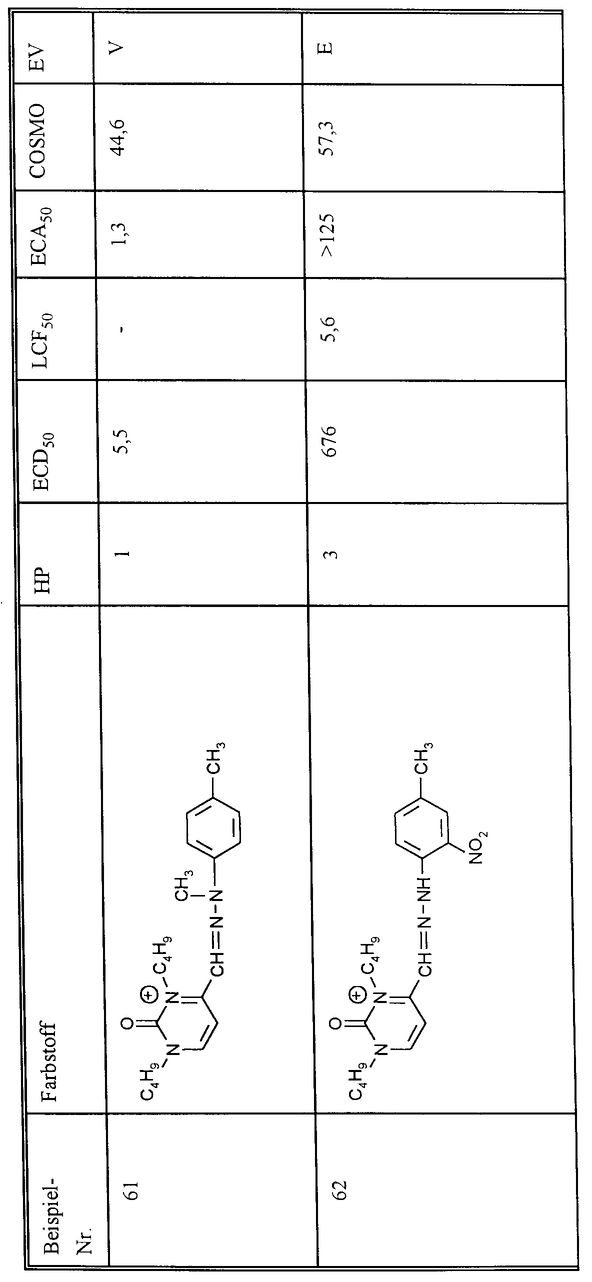

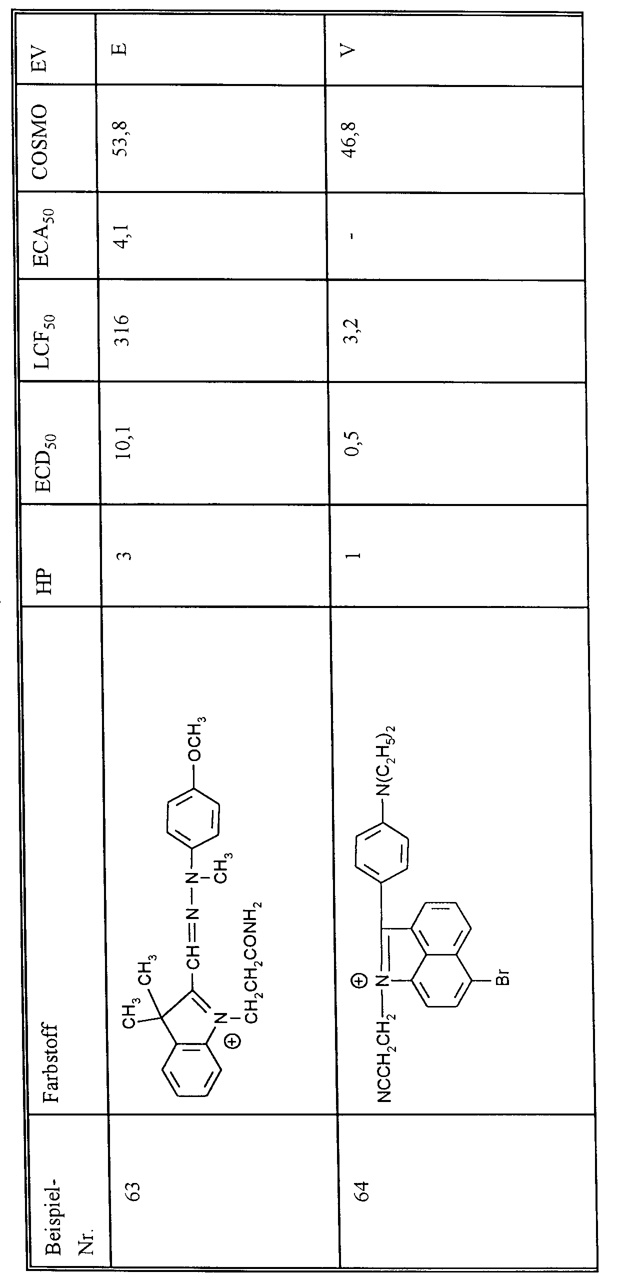

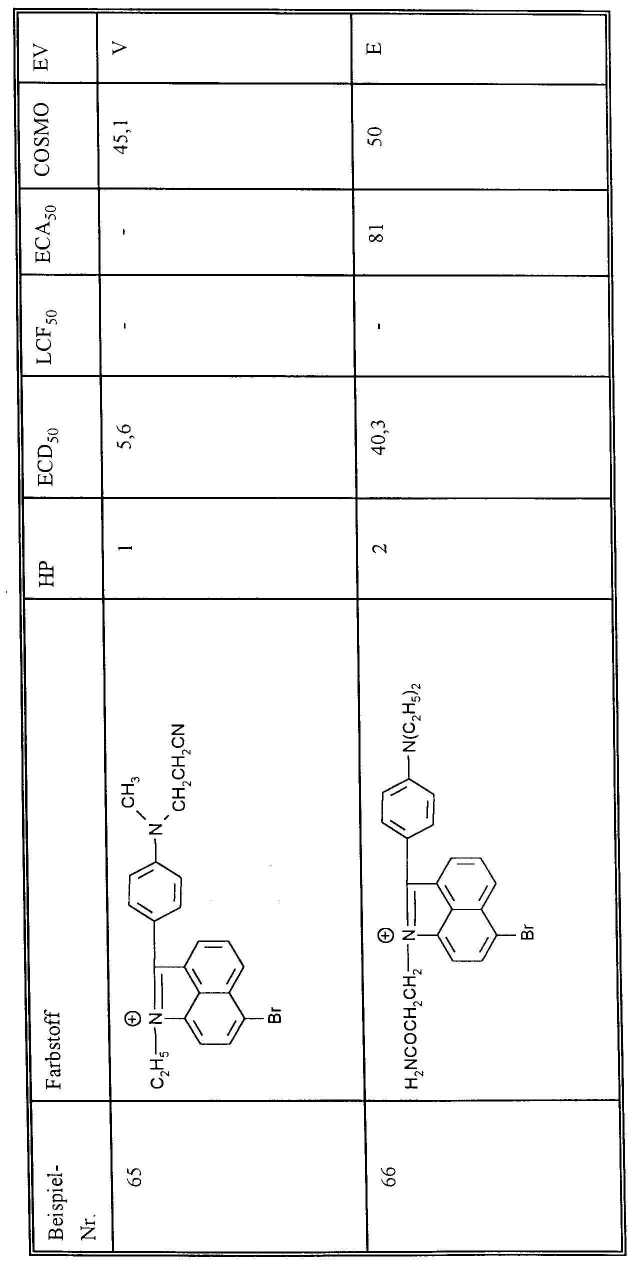

Ein weiterer Gegenstand der Erfindung sind kationische Farbstoffe der Formel 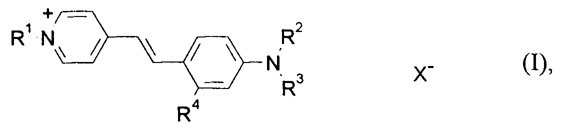 worin
- R¹ und R³: unabhängig voneinander -(CH₂)ₙ-N(C₁- bis C₄-alkyl)₂, Hydroxy-C₂- bis -C₆-alkyl, Acetoxy-C₂- bis -C₆-alkyl, Cyano-C₂- bis -C₆-alkyl, Amidocarbonyl-C₂- bis -C₆-alkyl, -(CH₂)ₙ-O-(CH₂)ₘ-OH oder -(CH₂)ₙ-O-(CH₂)ₘ-OCOCH₃ bedeuten,
- R²: C₁- bis C₆-Alkyl, Benzyl oder Phenethyl bedeutet oder die Bedeutung von R³ besitzt,
- R⁴: Wasserstoff oder C₁- bis C₆-Alkyl bedeutet,
- n und m: unabhängig voneinander 2, 3 oder 4 bedeuten und
- X⁻: ein Anion bedeutet.

Ein besonderer Gegenstand der Erfindung sind kationische Farbstoffe der Formel (I),
worin
- R¹ und R³: unabhängig voneinander -(CH₂)₂-N(CH₃)₂, -(CH₂)₃-N(CH₃)₂, -(CH₂)₃-N(C₂H₅)₂, -CH₂CH₂OH, -CH₂CH(OH)CH₃, -CH₂CH₂-OCOCH₃, - CH₂CH₂CN, -(CH₂)₂CONH₂, -(CH₂)₂-O-(CH₂)₂-OH oder -(CH₂)₂-O-(CH₂)₂-OCOCH₃ bedeuten,
- R²: Methyl, Ethyl, Propyl, Isopropyl, Butyl, Isobutyl, s-Butyl, Benzyl oder Phenethyl bedeutet oder die Bedeutung von R³ besitzt,
- R⁴: Wasserstoff oder Methyl bedeutet und
- X⁻: ein Anion bedeutet.

Ein ganz besonderer Gegenstand der Erfindung sind kationische Farbstoffe der Formel (I),
worin
- R': -(CH₂)₂-OH oder -(CH₂)₂-CONH₂ bedeutet,
- R²: Benzyl bedeutet,
- R³: -(CH₂)₂-OH oder -(CH₂)₂-CN bedeutet,
- R⁴: Wasserstoff bedeutet und
- X⁻: ein Anion bedeutet.

Ein weiterer Gegenstand der Erfindung sind kationische Farbstoffe der Formel 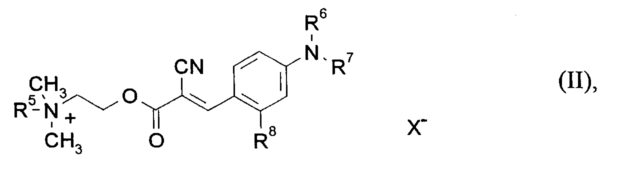 worin
- R⁵: C₁- bis C₆-Alkyl, Hydroxy-C₂- bis -C₆-alkyl, Acetoxy-C₂- bis -C₆-alkyl, - (CH₂)ₙ-O-(CH₂)ₘ-OH oder -(CH₂)ₙ-O-(CH₂)ₘ-OCOCH₃ bedeutet,
- R⁶: C₁- bis C₆-Alkyl, Benzyl oder Phenethyl bedeutet oder die Bedeutung von R⁷ besitzt,
- R⁷: -(CH₂)ₙ-N(C₁- bis C₄-alkyl)₂, Hydroxy-C₂- bis -C₆-alkyl, Amidocarbonyl-C₂- bis -C₆-alkyl oder -(CH₂)ₙ-O-(CH₂)ₘ-OH bedeutet,
- R⁸: Wassserstoff oder C₁- bis C₆-Alkyl bedeutet,
- n und m: unabhängig voneinander 2, 3 oder 4 bedeuten und
- X⁻: ein Anion bedeutet.

Ein besonderer Gegenstand der Erfindung sind kationische Farbstoffe der Formel (II),
worin
- R⁵: Methyl, Ethyl, Propyl, Isopropyl, Butyl, Isobutyl, s-Butyl, -CH₂CH₂OH, - CH₂CH(OH)CH₃, -CH₂CH₂OCOCH₃, -CH₂CH(CH₃)OCOCH₃, -(CH₂)₂-O-(CH₂)₂-OH oder -(CH₂)₂-O-(CH₂)₂-OCOCH₃ bedeutet,
- R⁶: Methyl, Ethyl, Propyl, Isopropyl, Butyl, Isobutyl, s-Butyl, Benzyl oder Phenethyl bedeutet oder die Bedeutung von R⁷ besitzt,
- R⁷: -(CH₂)₂-N(CH₃)₂, -(CH₂)₃-N(CH₃)₂, -(CH₂)₃-N(C₂H₅)₂, -CH₂CH₂OH, -CH₂CH(OH)CH₃, -(CH₂)₂CONH₂ oder -(CH₂)₂-O-(CH₂)₂-OH bedeutet,
- R⁸: Wasserstoff oder Methyl bedeutet und
- X⁻: ein Anion bedeutet.

Ein ganz besonderer Gegenstand der Erfindung sind kationische Farbstoffe der Formel (II),
worin
- R⁵: Hydroxyethyl oder Acetoxyethyl bedeutet,
- R⁶: Benzyl oder Phenethyl bedeutet,
- R⁷: -(CH₂)₃-N(CH₃)₂ oder Cyanethyl bedeutet,
- R⁸: Wasserstoff oder Methyl bedeutet und
- X⁻: ein Anion bedeutet.

Ein weiterer Gegenstand der Erfindung sind kationische Farbstoffe der Formel 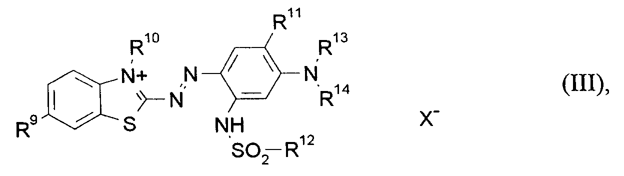 worin
- R⁹ und R¹¹: unabhängig voneinander Wasserstoff, Halogen, C₁- bis C₆-Alkyl oder C₁- bis C₆-Alkoxy bedeuten,
- R¹⁰: gegebenenfalls durch Halogen, Cyano, Hydroxy, C₁- bis C₄-Alkoxy oder phenylsubstituiertes C₁- bis C₆-Alkyl bedeutet,
- R¹²: gegebenenfalls durch Halogen, Cyano, Hydroxy, C₁- bis C₄-Alkoxy oder Phenyl substituierte C₁- bis C₆-Alkyl-, C₄- bis C₇-Cycloalkyl- oder Phenylreste bedeutet,
- R¹³ und R¹⁴: unabhängig voneinander Wasserstoff, gegebenenfalls durch Halogen, Cyano, Hydroxy, C₁- bis C₄-Alkoxy oder Phenyl substituierte C₁- bis C₆-Alkyl-, C₄- bis C₇-Cycloalkyl- oder Phenylreste bedeuten oder
- NR¹³R¹⁴: Pyrrolidino, Piperidino oder Morpholino bedeutet und
- X⁻: ein Anion bedeutet.

Ein besonderer Gegenstand der Erfindung sind kationische Farbstoffe der Formel (III),
worin
- R⁹ und R¹¹: unabhängig voneinander Wasserstoff, Chlor, Methyl oder Methoxy bedeuten,
- R¹⁰: Methyl, Ethyl, Hydroxyethyl, 2-Hydroxypropyl, Cyanethyl, Amidocarbonylethyl oder Benzyl bedeutet,
- R¹²: Methyl, Ethyl, Propyl, Butyl, Trifluormethyl, Phenyl, Tolyl oder Chlorphenyl bedeutet,
- R¹³ und R¹⁴: unabhängig voneinander Methyl, Ethyl, Propyl, Butyl, Benzyl, Hydroxyethyl, Methoxyethyl, Cyanethyl, Phenyl, Tolyl, Methoxyphenyl oder Chlorphenyl bedeuten und
- R¹³: zusätzlich Wasserstoff bedeuten kann oder
- NR¹³R¹⁴: Pyrrolidino, Piperidino oder Morpholino bedeutet und
- X⁻: ein Anion bedeutet.

Ein ganz besonderer Gegenstand der Erfindung sind kationische Farbstoffe der Formel (III),
worin
- R⁹: Wasserstoff oder Methoxy bedeutet,
- R¹⁰: Methyl bedeutet,
- R¹¹: Wasserstoff, Methyl oder Methoxy bedeutet,
- R¹²: Methyl oder Ethyl bedeutet,
- NR¹³R¹⁴: Dimethylamino, Diethylamino, Dipropylamino oder Pyrrolidino bedeutet und
- X⁻: ein Anion bedeutet.

Ein weiterer Gegenstand der Erfindung sind kationische Farbstoffe der Formel 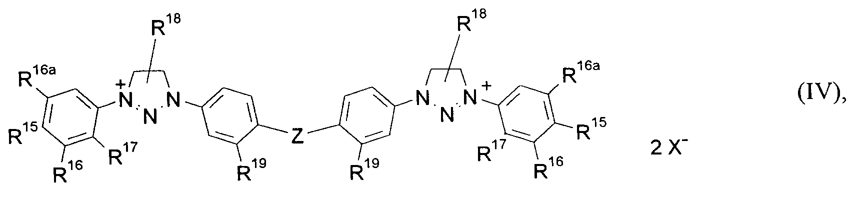 worin
- R¹⁵, R¹⁶, R^{16a} und R¹⁷: unabhängig voneinander Wasserstoff, Halogen, C₁- bis C₆-Alkyl, C₁- bis C₆-Alkoxy, Phenoxy, C₁- bis C₆-Alkanoylamino, Benzoylamino, C₁- bis C₆-Alkansulfonylamino, Benzolsulfonylamino, Cyano oder Nitro bedeuten,
- R¹⁸: Wasserstoff oder C₁- bis C₆-Alkyl bedeutet,
- R¹⁹: Wasserstoff, Methyl oder Methoxy bedeutet,
- Z: eine Brücke der Formeln -(CH₂)ₘ-, O, NH, SO₂, NHCO, NHCONH, NHSO₂NH, NHCOCONH oder 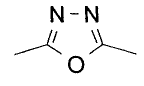 bedeutet,
- m: 1, 2 oder 3 bedeutet und
- X⁻: ein Anion bedeutet.

Ein besonderer Gegenstand der Erfindung sind kationische Farbstoffe der Formel (IV),
worin
- R¹⁵, R¹⁶ und R¹⁷: unabhängig voneinander Wasserstoff, Chlor, Methyl, Ethyl, Methoxy, Ethoxy, Phenoxy, Acetylamino, Propionylamino, Benzoylamino, Methansulfonylamino, Ethansulfonylamino, Cyano oder Nitro bedeuten,
- R^{16a} und R¹⁹: Wasserstoff,
- R¹⁸: Wasserstoff oder Methyl bedeutet,
- Z: eine Brücke der Formeln CH₂, CH₂CH₂, NH, NHCO, NHCONH oder 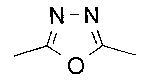 bedeutet und
- X⁻: ein Anion bedeutet.

Ein ganz besonderer Gegenstand der Erfindung sind kationische Farbstoffe der Formel (IV),
worin
- R¹⁵: Methoxy, Phenoxy oder Acetylamino bedeutet,
- R¹⁶: Wasserstoff, Methyl oder Methoxy bedeutet,
- R^{16a}, R¹⁷, R¹⁸ und R¹⁹: Wasserstoff bedeuten,
- Z: NH, NHCO, NHCONH oder 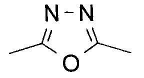 bedeutet und
- X⁻: ein Anion bedeutet.

Ein weiterer Gegenstand der Erfindung sind kationische Farbstoffe der Formel 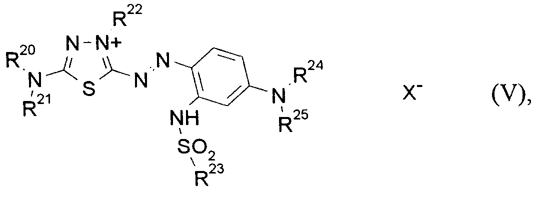 worin
- R²⁰, R²¹, R²⁴ und R²⁵: unabhängig voneinander ggf. durch Hydroxy, Cyano oder Methoxy substituiertes C₁- bis C₆-Alkyl, Benzyl, ggf. durch Methyl, Methoxy oder Cyano substituiertes Phenyl oder Tetramethylensulfonyl bedeuten und
- R²⁰ und R²⁴: unabhängig voneinander zusätzlich Wasserstoff bedeuten können oder
- NR²⁰R²¹ und NR²⁴R²⁵: unabhängig voneinander Pyrrolidino Piperidino oder Morpholino bedeuten können,
- R²² und R²³: unabhängig voneinander C₁- bis C₆-Alkyl bedeuten und
- X⁻: ein Anion bedeutet.

Ein besonderer Gegenstand der Erfindung sind kationische Farbstoffe der Formel (V),
worin
- R²⁰ und R²¹: unabhängig voneinander C₁- bis C₆-Alkyl bedeuten,
- R²² und R²³: unabhängig voneinander C₁- bis C₄-Alkyl bedeuten,
- R²⁴ und R²⁵: unabhängig voneinander C₁- bis C₆-Alkyl, Benzyl oder Phenyl bedeuten oder
- NR²⁴R²⁵: Pyrrolidino oder Piperidino bedeutet und
- X⁻: ein Anion bedeutet.

Ein ganz besonderer Gegenstand der Erfindung sind kationische Farbstoffe der Formel (V),
worin
- R²⁰R²¹: Diisopropylamino bedeutet,
- R²²: Methyl bedeutet,
- R²³: Methyl oder Ethyl bedeutet,
- NR²⁴R²⁵: Dimethylamino, Diethylamino, Dipropylamino oder Pyrrolidino bedeutet und
- X⁻: ein Anion bedeutet.

Ein weiterer Gegenstand der Erfindung sind kationische Farbstoffe der Formel 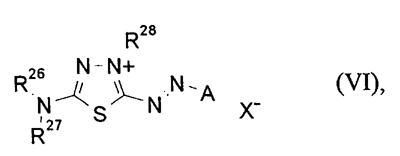 wobei
- A: für eine Struktur der Formel 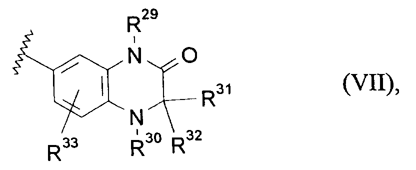 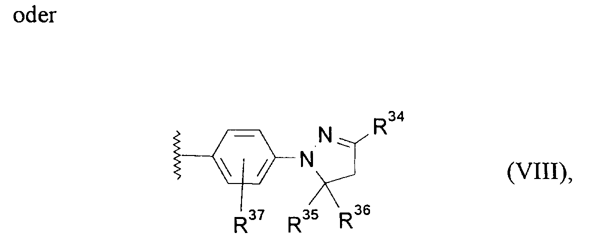 steht,
worin
- R²⁶ und R²⁷: unabhängig voneinander gegebenenfalls durch OH, CN oder CONH₂ substituiertes C₁- bis C₄-Alkyl bedeuten,
- R²⁸: einen gegebenenfalls verzweigten C₁- bis C₄-Alkyl-, Cyano-C₁- bis -C₄-Alkyl-, Hydroxy-C₁- bis -C₄-Alkyl-, Amido-C₁- bis -C₄-Alkyl-, C₁- bis C₄-Alkoxycarbonyl-C₁- bis -C₄-Alkyl-, Benzyl-, Phenethyl- oder Pyridylethylrest bedeutet,
- R²⁹ und R³⁰: unabhängig voneinander Wasserstoff C₁- bis C₄-Alkyl, C₇- bis C₉-Aralkyl oder C₄- bis C₇-Cycloalkyl bedeuten,
- R³¹ und R³²: unabhängig voneinander Wasserstoff C₁- bis C₄-Alkyl, C₆- bis C₁₀-Aryl, C₇- bis C₉-Aralkyl oder C₄- bis C₇-Cycloalkyl bedeuten oder
gemeinsam mit dem sie verbindenden C-Atom einen 5-, 6- oder mehrgliedrigen Ring bilden können,
- R³³: einen oder mehrere C₁- bis C₄-Alkyl-, C₁- bis C₄-Alkoxy-, C₇- bis C₉-Aralkyl-, C₄- bis C₇-Cycloalkyl-, Halogen-, C₁- bis C₄-Alkylcarbonylamino- oder C₁- bis C₄-Alkylsulfonylaminoreste bedeutet,
- R³⁶: C₁- bis C₄-Alkyl bedeutet,
- R³⁴ und R³⁵: unabhängig voneinander C₁- bis C₄-Alkyl oder C₆- bis C₁₀-Aryl bedeuten,
- R³⁷: einen oder mehrere C₁- bis C₄-Alkyl-, Chlor-, Brom-, C₁- bis C₄-Alkoxy-, C₁- bis C₄-Alkoxycarbonyl- oder C₁- bis C₄-Acylaminoreste bedeutet und
- X⁻: ein Anion bedeutet.

Ein besonderer Gegenstand der Erfindung sind kationische Farbstoffe der Formel (VI),
wobei
- A: für eine Struktur der Formeln (VII) oder (VIII) steht,
worin
- R²⁶ und R²⁷: unabhängig voneinander gegebenenfalls durch OH oder CN substituiertes C₁- bis C₃-Alkyl bedeuten,
- R²⁸: einen gegebenenfalls verzweigten C₁- bis C₄-Alkyl-, Cyano-C₁- bis -C₂-Alkyl-, Hydroxy-C₁- bis -C₃-Alkyl-, Amido-C₁- bis -C₂-Alkyl- oder Benzylrest bedeutet,
- R²⁹ und R³⁰: unabhängig voneinander Wasserstoff oder C₁- bis C₄-Alkyl bedeuten,
- R³¹ und R³²: unabhängig voneinander Wasserstoff oder C₁- bis C₄-Alkyl bedeuten oder
gemeinsam mit dem sie verbindenden C-Atom einen 5- oder 6-gliedrigen Ring bilden können,
- R³³: C₁- bis C₄-Alkyl, C₁- bis C₄-Alkoxy, C₆-Aryl, C₅- oder C₆-Cycloalkyl, Halogen, C₁- bis C₄-Alkylcarbonylamino oder C₁- bis C₄-Alkylsulfonylamino bedeutet,
- R³⁶: C₁- bis C₄-Alkyl bedeutet,
- R³⁴ und R³⁵: unabhängig voneinander C₁- bis C₄-Alkyl oder C₆-Aryl bedeuten,
- R³⁷: C₁- bis C₄-Alkyl, Chlor, Brom, C₁- bis C₄-Alkoxy, C₁- bis C₄-Alkoxycarbonyl oder C₁- bis C₄-Acylamino bedeutet und
- X⁻: ein Anion bedeutet.

Ein ganz besonderer Gegenstand der Erfindung sind kationische Farbstoffe der Formel (VI),
wobei
- A: für eine Struktur der Formeln (VII) oder (VIII) steht,
worin
- R²⁶ und R²⁷: unabhängig voneinander Methyl, Ethyl, Propyl, Isopropyl, Cyanethyl oder 2-Hydroxypropyl bedeuten,
- R²⁸: Methyl, Ethyl, Propyl, Butyl, Cyanethyl, 2-Hydroxypropyl, Amidoethyl oder Benzyl bedeutet,
- R²⁹ und R³⁰: unabhängig voneinander Wasserstoff, Methyl, Ethyl oder Butyl bedeuten,
- R³¹ und R³²: unabhängig voneinander Wasserstoff, Methyl oder Ethyl bedeuten oder
gemeinsam mit dem sie verbindenden C-Atom einen Cyclopentan- oder Cyclohexan-Ring bilden können,
- R³³: Methyl, Methoxy, Chlor, Brom, Methylcarbonylamino oder Methylsulfonylamino bedeutet,
- R³⁶: Methyl bedeutet,
- R³⁴ und R³⁵: unabhängig voneinander Methyl oder Phenyl bedeuten,
- R³⁷: Methyl, Chlor, Brom, Methoxy, Methoxycarbonyl oder Acetylamino bedeutet und
- X⁻: ein Anion bedeutet.

Ein weiterer Gegenstand der Erfindung sind kationische Farbstoffe der Formel (IX) 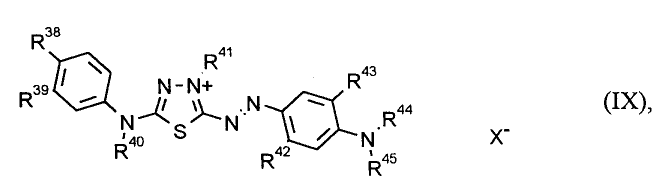 worin
- R³⁸ und R³⁹: unabhängig voneinander Wasserstoff, C₁- bis C₆-Alkyl, C₁- bis C₄-Perfluoralkyl, Halogen, Nitro, Cyano, C₁- bis C₄-Alkoxy-, C₆- bis C₁₀-Aryloxy, C₁- bis C₄-Alkylcarbonyl, C₁- bis C₄-Dialkylamino, Aminocarbonyl, C₁- bis C₄-Alkylcarbonylamino, C₁- bis C₄- Alkoxycarbonyl, C₁-bis C₄-Alkylsulfonyl oder C₆- bis C₁₀-Arylsulfonyl bedeuten.
- R⁴⁰ und R⁴¹: unabhängig voneinander ggf. mit Cyano, Hydroxy, Aminocarbonyl, C₁- bis C₄-Mono- oder Dialkylaminocarbonyl, C₁- bis C₄-Alkoxycarbonyl oder Carboxyl substituiertes C₁- bis C₆-Alkyl bedeuten, wobei R⁴⁰ und R⁴¹ nicht gleichzeitig unsubstituiertes C₁- bis C₆-Alkyl sein dürfen,
- R⁴² und R⁴³: unabhängig voneinander Wasserstoff C₁- bis C₆-Alkyl, C₁- bis C₄-Perfluoralkyl, Halogen, Nitro, Cyano, C₁- bis C₄-Alkoxy-, C₆- bis C₁₀-Aryloxy, C₁- bis C₄-Alkylcarbonyl oder C₁- bis C₄- Alkoxycarbonyl bedeuten,
- R⁴⁴ und R⁴⁵: unabhängig voneinander ggf. mit Cyano, Hydroxy, Aminocarbonyl, C₁- bis C₄-Mono- oder Dialkylaminocarbonyl, C₁- bis C₄-Alkoxycarbonyl, Carboxyl, C₁- bis C₄-Alkylsulfonyl substituiertes C₁- bis C₆-Alkyl oder gegebenenfalls mit Wasserstoff, C₁- bis C₆-Alkyl, C₁- bis C₄-Perfluoralkyl, Halogen, Nitro, Cyano, C₁- bis C₄-Alkoxy, C₆- bis C₁₀- Aryloxy, C₁- bis C₄-Alkylcarbonyl, C₁- bis C₄-Dialkylamino, Aminocarbonyl, C₁- bis C₄-Alkoxycarbonyl, C₁- bis C₄-Alkylsulfonyl oder C₆- bis C₁₀-Arylsulfonyl substituiertes C₆- bis C₁₀-Aryl bedeuten und
- X⁻: ein Anion bedeutet.

Ein besonderer Gegenstand der Erfindung sind kationische Farbstoffe der Formel (IX),
worin
- R³⁸ und R³⁹: unabhängig voneinander Wasserstoff, Methyl, Ethyl, Trifluormethyl, Brom, Chlor, Nitro, Cyano, Methoxy, Ethoxy, Phenyloxy, Methylcarbonyl, Ethylcarbonyl, Dimethylamino, Diethylamino, Aminocarbonyl, Acetylamino, Methoxycarbonyl, Ethoxycarbonyl, Methylsulfonyl, Ethylsulfonyl oder Phenylsulfonyl bedeuten,
- R⁴⁰ und R⁴¹: unabhängig voneinander Methyl, Cyanomethyl, Cyanoethyl, Amidocarbonylethyl, 2-Hydroxypropyl, Hydroxyethyl, Dimethylaminocarbonylethyl, Methoxycarbonylethyl, Ethylcarboxylethyl oder Carboxylethyl bedeuten,
wobei
- R⁴⁰ und R⁴¹: nicht gleichzeitig Methyl sind,
- R⁴² und R⁴³: unabhängig voneinander Wasserstoff, Methyl, Ethyl, Trifluormethyl, Chlor, Nitro, Cyano, Methoxy, Ethoxy, Methylcarbonyl, Phenoxy, Methoxycarbonyl oder Ethoxycarbonyl bedeuten,
- R⁴⁴ und R⁴⁵: unabhängig voneinander Methyl, Ethyl, Cyanethyl, Hydroxyethyl, Methansulfonylethyl, Methoxycarbonylethyl, Aminocarbonylethyl, Dimethylamino-carbonylethyl, Phenyl, 2-,3- oder 4-Tolyl, 2-,3- oder 4- Anisidyl, 4-Trifluormethyl, 4-Phenoxphenyl, 3- oder 4-Acetaminophenyl, 3 - oder 4-Nitrophenyl, 3- oder 4-Cyanophenyl, 3- oder 4- Acetylphenyl, 4-Diethylaminophenyl, 4-Methoxycarbonylphenyl, 4-Ethoxycarbonylphenyl oder 4-Methylsulfonylphenyl bedeuten und
- X⁻: ein Anion bedeutet.

Ein ganz besonderer Gegenstand der Erfindung sind kationische Farbstoffe der Formel (IX),
worin
- R³⁸: Wasserstoff, Methyl, Methoxy, Phenoxy, Nitro, Cyano, Methoxycarbonyl, Ethoxycarbonyl oder Methansulfonyl bedeutet,
- R³⁹: Wasserstoff, Methyl, Trifluormethyl oder Cyano bedeutet,
- R⁴⁰: Methyl, Ethyl, Cyanethyl oder Hydroxyethyl bedeutet,
- R⁴¹: Methyl, Ethyl, Cyanethyl, Hydroxyethyl, 2-Hydroxypropyl, Hydroxycarbonylethyl oder Aminocarbonylethyl bedeutet,
wobei
- R⁴⁰ und R⁴¹: nicht gleichzeitig Methyl sind,
- R⁴² und R⁴³: unabhängig voneinander Wasserstoff, Methyl oder Methoxy bedeuten,
- R⁴⁴: Wasserstoff, Methyl, Ethyl, Cyanethyl, Hydroxyethyl oder Methansulfonylethyl bedeutet,
- R⁴⁵: Methyl, Ethyl, Phenyl oder 4-Methoxyphenyl bedeutet und
- X⁻: ein Anion bedeutet.

Ein weiterer Gegenstand der Erfindung sind kationische Farbstoffe der Formel 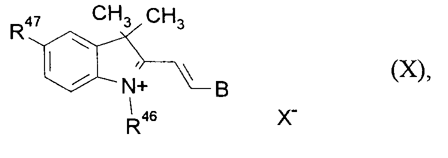 wobei B für eine Struktur der Formeln 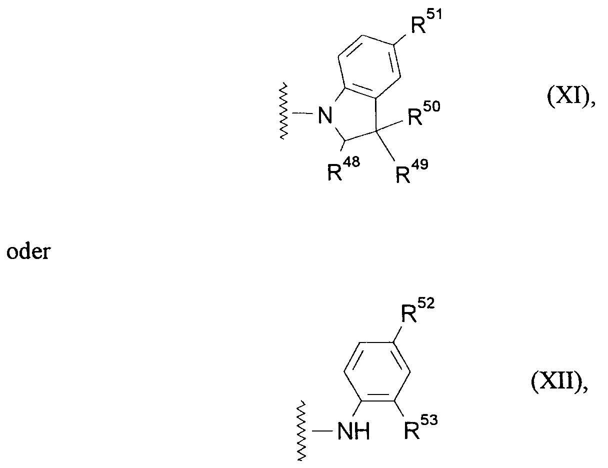 steht, worin
- R⁴⁶: einen gegebenenfalls verzweigten Cyano-C₁- bis -C₄-Alkyl-, Hydroxy-C₁- bis -C₄-Alkyl-, Amido-C₁- bis -C₄-Alkyl-, C₁- bis C₄-Alkoxycarbonyl-C₁- bis -C₄-Alkyl-Rest oder einen 3-Sulfolanylrest bedeutet oder,
wenn B für die Formel (XII) steht und R⁵² und/oder R⁵³ ein durch OH, CN oder CONH₂ substituiertes C₁- bis C₄-Alkyl bedeuten, zusätzlich einen C₁- bis C₄-Alkylrest bedeuten kann,
- R⁴⁷: Wasserstoff C₁- bis C₄-Alkyl, C₁- bis C₄-Alkoxy oder Halogen bedeutet,
- R⁴⁸, R⁴⁹ und R⁵⁰: unabhängig voneinander Wasserstoff oder C₁- bis C₄-Alkyl bedeuten,
- R⁵¹: Wasserstoff, C₁ - bis C₄-Alkyl, C₁- bis C₄-Alkoxy oder Halogen bedeutet,
- R⁵² und R⁵³: unabhängig voneinander Wasserstoff, gegebenenfalls durch OH, CN oderCONH₂ substituiertes C₁- bis C₄-Alkyl, C₁- bis C₄-Alkoxy oder Halogen bedeuten und
- X⁻: ein Anion bedeutet.

Ein besonderer Gegenstand der Erfindung sind kationische Farbstoffe der Formel (X),
worin
- R⁴⁶: einen Cyanethyl-, 2-Hydroxypropyl-, Amidoethyl- oder 3-Sulfolanylrest bedeutet oder,
wenn B für die Formel (XII) steht und R⁵² und/oder R⁵³Cyanmethyl oder Cyanethyl bedeuten, zusätzlich einen Methylrest bedeuten kann,
- R⁴⁷: Wasserstoff, Methyl, Methoxy, Chlor oder Brom bedeutet,
- R⁴⁸, R⁴⁹ und R⁵⁰: unabhängig voneinander Wasserstoff oder Methyl bedeuten,
- R⁵¹: Wasserstoff, Methyl, Methoxy oder Chlor bedeutet,
- R⁵² und R⁵³: unabhängig voneinander Wasserstoff, Cyanmethyl, Cyanethyl, Methoxy oder Chlor bedeuten und
- X⁻: ein Anion bedeutet.

Ein weiterer Gegenstand der Erfindung sind kationische Farbstoffe der Formel 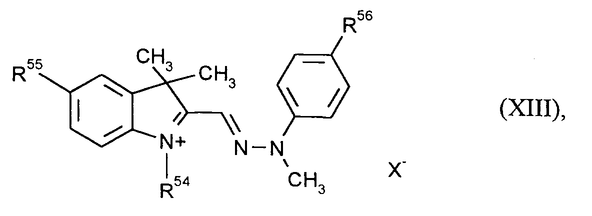 worin
- R⁵⁴: einen gegebenenfalls verzweigten und durch CN oder CONH₂ substituierten C₁- oder C₃-Alkylrest, einen Allylrest oder einen 3-Sulfolanylrest bedeutet oder,
wenn R⁵⁶ durch OH, CN oder CONH₂ substituiertes C₁- bis C₄-Alkyl darstellt, zusätzlich einen gegebenenfalls verzweigten und gegebenenfalls durch OH, CN oder CONH₂ substituierten C₁- bis C₄-Alkylrest bedeuten kann,
- R⁵⁵: Wasserstoff, C₁- bis C₄-Alkyl, C₁ - bis C₄-Alkoxy oder Halogen bedeutet,
- R⁵⁶: Wasserstoff, einen gegebenenfalls verzweigten C₁- bis C₄-Alkyl-, C₁- bis C₄-Alkoxy-, Cyano-C₁- bis C₄-Alkyl-, Hydroxy-C₁- bis C₄-Alkyl- oder Amido-C₁- bis C₄-Alkylrest bedeutet und
- X⁻: ein Anion bedeutet.

Ein besonderer Gegenstand der Erfindung sind kationische Farbstoffe der Formel (XIII),
worin
- R⁵⁴: einen Amidomethyl-, Cyanpropyl-, Allyl- oder 3-Sulfolanylrest bedeutet oder,
wenn R⁵⁶ Cyanmethyl darstellt, zusätzlich einen Methylrest bedeuten kann,
- R⁵⁵: Wasserstoff, Methyl, Methoxy oder Chlor bedeutet,
- R⁵⁶: Wasserstoff, Methyl, Methoxy oder Cyanmethyl bedeutet und
- X⁻: ein Anion bedeutet.

Ein weiterer Gegenstand der Erfindung sind kationische Farbstoffe der Formel 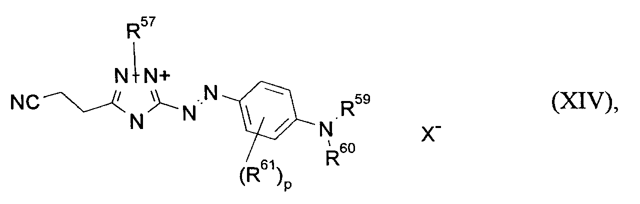 worin
- R⁵⁷ und R⁵⁸: unabhängig voneinander einen gegebenenfalls durch OH, CN oder CONH₂substituierten C₁- bis C₄-Alkylrest, Benzyl oder Phenethyl bedeuten,
- R⁵⁹ und R⁶⁰: unabhängig voneinander Wasserstoff, einen gegebenenfalls verzweigten C₁- bis C₄-Alkyl-, Cyano-C₁- bis -C₄-Alkyl-, Hydroxy-C₁- bis -C₄-Alkyl-, Amido-C₁- bis -C₄-Alkyl-, C₁- bis C₄-Alkoxycarbonyl-C₁- bis -C₄-Alkylrest, Benzyl, Phenethyl oder einen gegebenenfalls durch Methyl, Methoxy, Acetylamino oder Chlor substituierten Phenylrest bedeuten oder
- NR⁵⁹R⁶⁰: Pyrrolidino, Piperidino oder Morpholino bedeutet,
- R⁶¹: Wasserstoff C₁- bis C₄-Alkyl, C₁- bis C₄-Alkoxy, C₆-Aryl, C₅- bis C₇-Cycloalkyl, Halogen, C₁- bis C₄-Alkylcarbonylamino oder C₁- bis C₄-Alkylsulfonylamino bedeutet,
- p: 1 oder 2 bedeutet und
- X⁻: ein Anion bedeutet.

Ein besonderer Gegenstand der Erfindung sind kationische Farbstoffe der Formel (XIV),
worin
- R⁵⁷ und R⁵⁸: unabhängig voneinander Methyl, Ethyl, Propyl, Cyanethyl, Hydroxyethyl, 2-Hydroxypropyl, Amidoethyl oder Benzyl bedeuten,
- R⁵⁹ und R⁶⁰: unabhängig voneinander gegebenenfalls verzweigte C₁- bis C₄-Alkyl- oder Cyano-C₁- bis -C₄-Alkylreste, Benzyl, Phenyl, Tolyl oder Methoxyphenyl bedeuten und
- R⁵⁹: zusätzlich Wasserstoff bedeuten kann oder
- NR⁵⁹R⁶⁰: Pyrrolidino oder Piperidino bedeutet,
- R⁶¹: in o-Stellung zur Azogruppe steht und Wasserstoff, C₁- bis C₄-Alkyl, Halogen, C₁- bis C₄-Alkylcarbonylamino oder C₁- bis C₄-Alkylsulfonylamino bedeutet,
- p: 1 bedeutet und
- X⁻: ein Anion bedeutet.

Ein ganz besonderer Gegenstand der Erfindung sind kationische Farbstoffe der Formel (XIV),
worin
- R⁵⁷ und R⁵⁸: gleich sind und Methyl, Ethyl, Cyanethyl oder Benzyl bedeuten,
- R⁵⁹ und R⁶⁰: unabhängig voneinander Methyl, Ethyl, Cyanoethyl, Benzyl oder Phenyl bedeuten und
- R⁵⁹: zusätzlich Wasserstoff bedeuten kann,
- R⁶¹: in o-Stellung zur Azogruppe steht und Wasserstoff, Methyl, Chlor, Brom, Methylcarbonylamino oder Methylsulfonylamino bedeutet,
- p: 1 bedeutet und
- X⁻: ein Anion bedeutet.

Ein weiterer Gegenstand der Erfindung sind Anhydrobasen der Formeln 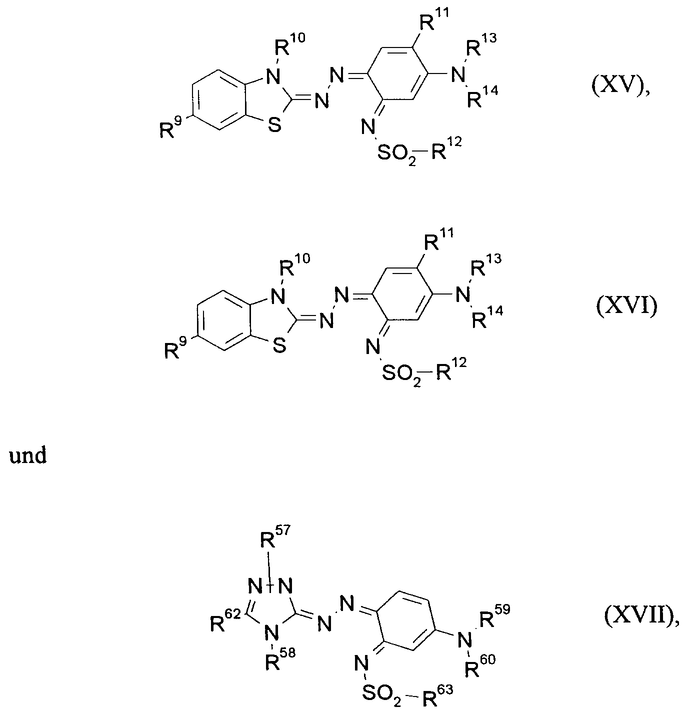 worin
- R⁹ bis R¹⁴, R²⁰ bis R²⁵ und R⁵⁷ bis R⁶⁰: die oben angegebene allgemeine, besondere oder ganz besondere Bedeutung besitzen und
- R⁶²: Wasserstoff oder Cyanethyl, insbesondere Wasserstoff, bedeutet und
- R⁶³: C₁- bis C₄-Alkyl, insbesondere Methyl und Ethyl, bedeutet.

Alkylreste, auch abgewandelte, wie z. B. Alkoxy- und Aralkylreste, sind vorzugsweise solche mit 1 bis 8, vorzugsweise 1 bis 4 C-Atomen, sofern nichts Anderes angegeben ist. Sie können auch verzweigt sein. Unter Cycloalkylresten werden insbesondere solche mit 4 bis 7, vorzugsweise 5 oder 6 C-Atomen verstanden.

Alkenylreste sind solche mit 2 bis 6, vorzugsweise 2 oder 3 C-Atomen.

Arylreste, auch solche in Aralkylresten, sind vorzugsweise Phenylreste, die gegebenenfalls durch 1 bis 3 Reste aus der Gruppe Fluor, Chlor, Methyl, Ethyl, Methoxy, Ethoxy, Cyano, Hydroxy oder Nitro substituiert sind.

Unter Halogen sind insbesondere Fluor, Chlor und Brom zu verstehen.

Als Anionen sind farblose, organische und anorganische Anionen bevorzugt, beispielsweise Fluorid, Chlorid, Bromid, Iodid, Perchlorat, Tetrafluoroborat, Hydroxid, Hydrogensulfat, Sulfat, Dihydrogenphosphat, Hydrogenphosphat, Phosphat, Hydrogencarbonat, Carbonat, Methylsulfat, Ethylsulfat, Cyanat, Thiocyanat, Tri- oder Tetrachlorozinkat, Tetrachloroferrat, Hexafluorosilikat und Anionen gesättigter oder ungesättigter aliphatischer, cycloaliphatischer, aromatischer oder heterocyclischer Carbon- oder Sulfonsäuren wie Formiat, Acetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nikotinsäure, Methansulfonat, Ethansulfonat, Benzolsulfonat, Chlorbenzolsulfonat oder Toluolsulfonat. Wenn es sich um mehrwertige Anionen handelt, wie z. B. um Sulfat oder Oxalat, dann steht X⁻ für ein Äquivalent solch eines mehrwertigen Anions.

Die erfindungsgemäßen kationischen Farbstoffe lassen sich nach an sich bekannten Verfahren herstellen.

Die Farbstoffe der Formel (I) erhält man beispielsweise, indem man quaterniertes 4-Methylpyridin mit entsprechenden 4-Substituiert-amino-benzaldehyden kondensiert. Dies kann beispielsweise geschehen in Lösungsmitteln wie Alkoholen, z.B. Ethanol, Propanol, Butanol, Pentanol oder Hexanol, oder Glycolen, z.B. Ethylenglycol oder Propylenglycol, cyclischen Estern, z.B. Ethylencarbonat, Propylencarbonat oder Butyrolacton sowie Amiden, z.B. Dimethylformamid, Dimethylacetamid oder N-Methylpyrrolidon in Gegenwart von sauren, z.B. Eisessig oder Methansulfonsäure, und/oder vorzugsweise basischen Katalysatoren, z.B. Piperidin, Pyrrolidin, Piperazin oder Pyridin, bei Temperaturen zwischen 70 und 180°C.

Die Farbstoffe der Formel (II) erhält man beispielsweise, indem man geeignete Cyanessigester mit 4-Substituiert-amino-benzaldehyden kondensiert. Dies kann unter Bedingungen geschehen, wie sie bei den Farbstoffen der Formel (I) angegeben sind. Die Reaktionstemperatur liegt jedoch zwischen Raumtemperatur und 100°C. Auch Acetanhydrid, gegebenenfalls in Gegenwart der oben beschriebenen sauren oder basischen Katalysatoren ist ein geeignetes Reaktionsmedium.

Die Farbstoffe der Formeln (III), (V), (VI), (IX) und (XIV) erhält man beispielsweise, indem man geeignete 2-Aminobenzthiazole, 2-Amino-1,3,4-thiadiazole bzw. 2-Amino-5-cyanethyltriazole diazotiert und auf geeignete substituierte Aniline oder Derivate davon kuppelt und die so erhaltenen Azofarbstoffe mit geeigneten Alkylierungsmitteln quaterniert. Die Diazotierung erfolgt beispielsweise in anorganischen oder organischen Säuren oder Säuremischungen mit Natriumnitrit oder Nitrosylschwefelsäure. Die Kupplung erfolgt beispielsweise in Wasser, anorganischen oder organischen Säuren oder mit Wasser mischbaren Lösungsmitteln oder Mischungen davon gegebenenfalls unter Zusatz von Basen. Die Quaternierung erfolgt beispielsweise in Wasser, organischen Säuren oder gegen Alkylierungsmittel inerten Lösungsmitteln oder Mischungen davon, gegebenenfalls in Gegenwart von Basen. Anorganische Säuren sind beispielsweise Salzsäure, Schwefelsäure und Phosphorsäure, organische Säuren sind beispielsweise Ameisensäure, Essigsäure und Propionsäure. Inerte Lösungsmittel sind beispielsweise die eben genannten organischen Säuren, γ-Butyrolacton, N-Methylpyrrolidon, Acetonitril, Tetramethylensulfon, Toluol, Xylol oder Chlorbenzol. Alkylierungsmittel sind beispielsweise Dimethyl- oder Diethylsulfat, Benzolsulfonsäuremethylester, Ethylenoxid, Propylenoxid, Acrylnitril, Acrylsäureester oder Acrylsäureamid. Geeignete Basen sind beispielsweise Natrium- oder Kaliumacetat, Magnesiumoxid, Triethanolamin oder Triisopropanolamin.

Die Farbstoffe der Formel (IV) erhält man beispielsweise durch Tetrazotieren von bifunktionellen aromatischen Aminen der Formel 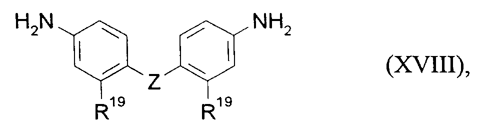 worin
- R¹⁹ und Z: die oben angegebene Bedeutung besitzen,
und Kuppeln auf funktionalisierte Aniline der Formel 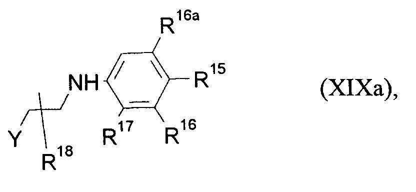 worin
- R¹⁵ bis R¹⁸: die oben angegebene Bedeutung besitzen und
- Y: für eine Abgangsgruppe steht,
und anschließende Cyclisierung oder
durch Diazotieren von aromatischen Aminen der Formel 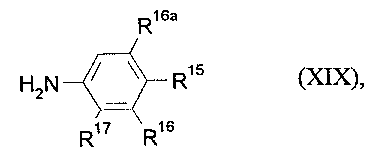 worin
- R¹⁵ bis R¹⁷: die oben angegebene Bedeutung besitzen,
und Kuppeln auf funktionalisierte aromatische Amine der Formel 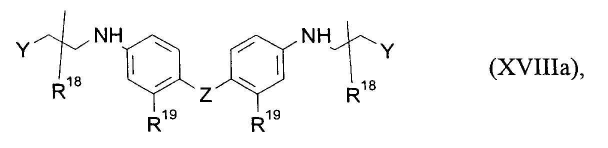 worin
- R¹⁸, R¹⁹ und Z: die oben angegebene Bedeutung besitzen und
- Y: für eine Abgangsgruppe steht,
und anschließende Cyclisierung.

Beispiele für Abgangsgruppen Y sind I, Br, Cl, OSO₂CH₃, OSO₂C₆H₅, OSO₃H oder ähnliche.

Diazotierung, Tetrazotierung und Kupplung werden wie oben bei den Farbstoffen der Formeln (III), (V), (VI), (IX) und (XIV) beschrieben durchgeführt. Für den Cyclisierungsschritt wird vorteilhaft das Kupplungsmedium neutral bis schwach alkalisch eingestellt und gegebenenfalls bei Temperaturen zwischen Raumtemperatur und 70°C gearbeitet.

Die funktionalisierten aromatischen Amine der Formel (XVIIIa) und Aniline der Formel (XIXa) werden aus den entsprechenden Aminen der Formel (XVIII) bzw. Anilinen der Formel (XIX) hergestellt durch Umsetzung mit beispielsweise aliphatischen Chlor- oder Bromalkoholen wie 2-Bromethanol oder Epoxiden wie Ethylenoxid oder Propylenoxid und anschließende Überführung der Hydroxygruppe in die Abgangsgruppe Y durch beispielsweise Veresterung mit Methansulfonsäurechlorid, Benzolsulfonsäurechlorid oder Schwefelsäure oder Überführung in die Halogenide mit beispielsweise Bromwasserstoffsäure oder Chlorwasserstoffsäure.

Die Farbstoffe der Formel (X) werden hergestellt durch Kondensation von 1-substituierten 2-Formylmethylen-3,3-dimethylindolinen mit geeigneten Indolinen oder Anilinen. Die Kondensation kann mit wassersabspaltenden Mitteln wie Phosphoroxychlorid, gegebenenfalls in Gegenwart von Lösungsmitteln, oder in Lösungsmitteln in Gegenwart saurer und/oder basischer Katalysatoren erfolgen, wobei in letzterem Falle das Reaktionswasser vorteilhaft abdestilliert wird. Die Reaktionstemperatur liegt bei Raumtemperatur bis 60°C, im Falle der destillativen Entfernung von Wasser bei der Siedetemperatur des Lösungsmittels oder seines Azeotrops mit Wasser. Geeignete Lösungsmittel sind vorzugsweise aromatische Lösungsmittel wie Toluol, Xylol oder Chlorbenzol sowie Chloroform und Ethylenchlorid. Als Katalysatoren kommen beispielsweise in Frage Eisessig, Methan- oder Benzolsulfonsäure, Piperidin, Piperazin, Pyrrolidin oder Pyridin.

Die Farbstoffe der Formel (XIII) werden hergestellt durch Diazotieren und Kuppeln von geeigneten Anilinen auf 1-substituierte 2-Methylen-3,3-dimethylindoline und anschließende Quaternierung der Farbstoffzwischenprodukte. Geeignete Bedingungen für Diazotierung und Kupplung sind bereits bei der Herstellung der Farbstoffe der Formeln (III), (V), (VI), (IX) und (XIV) beschrieben worden. Die Quaternierung kann erfolgen in Wasser oder Lösungsmitteln oder Mischungen davon in Gegenwart von Basen bei Temperaturen zwischen Raumtemperatur und 80°C. Als Quaternierungsmittel wird Dimethylsulfat oder beispielsweise Benzolsulfonsäuremethylester eingesetzt. Geeignete Lösungsmittel sind aromatische Lösungsmittel wie Toluol, Xylol oder Chlorbenzol, geeignete Basen sind Natrium- oder Kaliumhydroxid, vorzugsweise in Form ihrer wäßrigen Lösungen, Magnesiumoxid, Ethyl-diisopropylamin oder Triisopropanolamin. Beim Arbeiten in Zweiphasenmischungen aus Wasser und Lösungsmittel empfiehlt sich der Zusatz eines Phasentransferkatalysators, beispielsweise eines quartären Ammoniumsalzes wie Triethylbenzylammonium, Tetrabutylammonium oder Methyltrioctylammonium jeweils in Form beispielsweise ihres Chlorids oder Bromids.

Die erfindungsgemäßen kationischen Farbstoffe der Formeln (I) bis (VI), (IX), (X), (XIII) und (XIV) eignen sich hervorragend zum Färben und Bedrucken von kationisch färbbaren Fasern, vorzugsweise von Polymerisaten und Mischpolymerisaten des Acrylnitrils und Dicyanoethylens, sowie von sauer modifizierten Fasern aus Polyamid und Polyester, wobei echte Farbtöne erhalten werden. Bei diesen Färbeverfahren werden Abwässer erhalten, die im Sinne der eingangs gegebenen Definition in der Regel mindertoxisch sind. Die Farbstoffe können auch Verwendung finden zum Färben und Bedrucken von tannierten Cellulosematerialien, Papier, Seide und Leder. Sie sind weiterhin geeignet zur Herstellung von Schreibflüssigkeiten, Stempelflüssigkeiten, Kugelschreiberpasten und Inkjet-Tinten. Sie lassen sich auch im Gummidruck verwenden.

Das Färben von beispielsweise Polymerisaten und Mischpolymerisaten des Acrylnitrils kann z.B. aus schwach sauerer Flotte erfolgen, wobei man in das Färbebad vorzugsweise bei 40 bis 60°C eingeht und dann bei Kochtemperatur färbt. Man kann auch unter Druck bei Temperaturen über 100°C färben. Desweiteren lassen sich mit den erfindungsgemäßen kationischen Farbstoffen Spinnlösungen zum Färben polyacrylnitrilhaltiger Fasern herstellen. Die Fasern können trocken oder naß versponnen werden.

Das Färben von Papier erfolgt beispielsweise in der wäßrigen Aufschlämmung von Cellulosefasern vor und während des Auflaufs auf die Papiermaschine unter sauren bis neutralen Bedingungen in Gegenwart oder Abwesenheit von organischen und/oder anorganischen Leimungsmitteln und gegebenenfalls in Gegenwart weiterer Hilfsstoffe zur Papiererzeugung, z. B. Retentions- und/oder Naßfestmittel.

Die Färbungen der erfindungsgemäßen kationischen Farbstoffe auf Materialien aus Polyacrylnitril zeichnen sich durch sehr gute Licht-, Naß- und Reibechtheiten aus. Die Farbstoffe zeigen eine hohe Affinität zu Papier, so daß bei der Färbung nur ein geringer Teil im Abwasser verbleibt.

Die erfindungsgemäßen kationischen Farbstoffe können einzeln, in Mischungen untereinander oder in Mischung mit anderen Farbstoffen angewendet werden.

Die vorliegende Erfindung betrifft schließlich auch kationisch gefärbte Fasern, tannierte Cellulosematerialien, Papier, Seide, Leder, Schreibflüssigkeiten, Stempelflüssigkeiten, Kugelschreiberpasten und Inkjet-Tinten, die dadurch gekennzeichnet sind, daß sie mindestens einen Farbstoff der Formeln (I) bis (VI), (IX), (X), (XIII) und (XIV) enthalten.

Die Anhydrobasen der Formeln (XV), (XVI) und (XVII) können aus den Farbstoffen der Formeln (III), (V) bzw. (XIV) durch Umsetzung mit Basen erhalten werden. Geeignete Basen sind beispielsweise Hydroxide wie Natrium-, Kalium- oder Calciumhydroxid, Oxide wie Magnesiumoxid, Alkoholate wie Natriummethylat oder Amine wie Triethylamin, Di- oder Triethanolamin, Piperidin oder Pyridin. Geeignete Reaktionsmedien für die Umsetzung mit solchen Basen sind beispielsweise Wasser, Alkohole wie Methanol, Ethanol, Isopropanol, Ketone wie Aceton oder Butanon oder Mischungen davon.

Die Anhydrobasen der Formeln (XV), (XVI) und (XVII) sind geeignet zum Anfärben von Fasern und Geweben aus Polyester sowie als Farbstoffe für den Sublimations- oder Diffusionstransferdruck. Transferdruck ist für die textile Anwendung beispielsweise aus US-P 4 137 042, für die Anwendung auf Papier oder sonstigen Substraten zur Informations- oder Bilddarstellung beispielsweise aus EP-A 0 384 040 bekannt. Insbesondere von Interesse ist der Transferdruck auf Papier oder vergleichbare Substrate wie Kunstoffolien oder -vliese, die mit einer sauren Schicht belegt sind. Solche Schichten können beispielsweise aus sauren Tonen oder Phenolharzen oder Salicylsäuren oder deren Salze in geeigneten Bindersystemen bestehen. Bei der Übertragung der Anhydrobasen der Formeln (XV), (XVI) oder (XVII) auf solche sauer beschichteten Papiere werden in dieser Schicht durch Protonierung die Farbstoffe der Formeln (III), (V) bzw. (XIV) zurückgebildet.

Die Erfindung betrifft auch Fasern und Gewebe aus Polyester, die mit Anhydrobasen der Formeln (XV), (XVI) oder (XVII) gefärbt sind. Sie betrifft auch Gewebe aus Polyester oder Polyacrylnitril, die mit diesen Anhydrobasen bedruckt sind. Sie betrifft ebenso Materialien für den Sublimations- oder Diffusionstransferdruck zur Darstellung von Informationen oder Bildern, die in ihrer Geberschicht mindestens eine Anhydrobase der Formeln (XV), (XVI) oder (XVII) enthalten.

### Beispiele:

### Beispiel 67: (Formel I)

9.4 g γ-Picolin und 6.9 g Propylenglycol wurden auf 120°C erhitzt. Bei dieser Temperatur wurden langsam 7.3 g Chlorethanol zugetropft. Anschließend wurde 1 h bei 120°C und 3 h bei 140°C nachgerührt. Nach dem Abkühlen auf 80°C wurden 17.2 g N-Benzyl-N-hydroxyethyl-aminobenzaldehyd und 0.7 g Piperidin zugegeben. Nach 4 h bei 80°C wurden die flüchtigen Bestandteile durch Wasserdampfdestillation entfernt. Verdünnen des Rückstands mit 12 ml Wasser/Eisessig 10:2 ergab eine gebrauchsfertige 25-gew.-proz. Lösung des Farbstoffs der Formel (I) mit R¹ = R³ = Hydroxyethyl, R² = Benzyl, R⁴ = Wasserstoff und X⁻ = Chlorid.

Diese Lösung zeigte ein Absorptionsmaximum bei 432 nm.

Ligninhaltiges Papier wurde in einem brillanten Orange mit guten Abwasserwerten gefärbt.

Analog wurden die Farbstoffe der folgenden Tabelle hergestellt:

**Tabelle**

| Beispiel | R¹ | R² | R³ | R⁴ | X⁻ | λₘₐₓ ^{a)} |
|---|---|---|---|---|---|---|
| 68 | -(CH₂)₂-OH | -CH₂-C₆H₅ | -(CH₂)₂-OH | CH₃ | Cl⁻ | 438 nm |
| 69 | -(CH₂)₂CONH₂ | -CH₂-C₆H₅ | -(CH₂)₂-OH | H | Cl⁻ | 474 nm |
| 70 | -(CH₂)₂-OH | -C₂H₄-C₆H₅ | -(CH₂)₂-CN | H | Cl⁻ | 462 nm |
| 71 | -(CH₂)₂-OH | -CH₂-C₆H₅ | -(CH₂)₂-CN | H | Cl⁻ | 456 nm |
| 72 | -(CH₂)₂CONH₂ | -C₂H₄-C₆H₅ | -(CH₂)₂-CN | H | Cl⁻ | 466 nm |
| 73 | -(CH₂)₂CONH₂ | -CH₂-C₆H₅ | -(CH₂)₂-CN | H | Cl⁻ | 458 nm |

| | | | | | | |
|---|---|---|---|---|---|---|
| ^{a)} in Wasser/Eisessig 10:2 | | | | | | |

### Beispiel 74: (Formel II)

30 g Essigsäureanhydrid und 8.5 g Cyanessigsäure wurden bei Raumtemperatur mit 24 g Bis-hydroxyethyl-dimethylammoniumchlorid versetzt und 12 h bei Raumtemperatur verrührt. Es wurden 24.8 g N-Phenethyl-N-(3-dimethylaminopropyl)aminobenzaldehyd zugegeben und 6 h bei 70°C gerührt. Die Mischung wurde mit 12 g Wasser und 1.2 g Eisessig verdünnt. Man erhielt so eine gebrauchsfertige Lösung des Farbstoffs der Formel (II) mit R⁵ = Acetoxyethyl, R⁶ = Phenethyl, R⁷ = -(CH₂)₃-N(CH₃)₂, R⁸ = Wasserstoff und X⁻ = Acetat.

Diese Lösung zeigte ein Absorptionsmaximum bei 423 nm.

Ligninhaltiges Papier wurde in einem brillanten grünstichigen Gelb mit guten Abwasserwerten gefärbt.

Analog wurden die Farbstoffe der folgenden Tabelle hergestellt:

**Tabelle**

| Beispiel | R⁵ | R⁶ | R⁷ | R⁸ | X⁻ | λₘₐₓ ^{a)} |
|---|---|---|---|---|---|---|
| 75 | -(CH₂)₂-OCOCH₃ | -C₂H₄-C₆H₅ | -(CH₂)₃-N(CH₃)₂ | CH₃ | Cl⁻ | 435 nm |
| 76 | -(CH₂)₂-OCOCH₃ | -C₂H₄-C₆H₅ | -(CH₂)₃-N(C₂H₅)₂ | H | Cl⁻ | 435 nm |
| 77 | -(CH₂)₂-OCOCH₃ | -CH₂-C₆H₅ | -(CH₂)₂-CN | H | Cl⁻ | 421 nm |

| | | | | | | |
|---|---|---|---|---|---|---|
| ^{a)} in Wasser/Eisessig 10:2 | | | | | | |

### Beispiel 78: (Formel III)

18 g 2-Amino-6-methoxy-benzthiazol wurden in einer Mischung aus 200 ml Eisessig, 40 ml 85-gew.-proz. Phosphorsäure und 30 ml 48-gew.-proz. Schwefelsäure gelöst. Bei 0-5°C wurden während 30 min 34 g Nitrosylschwefelsäure zugetropft. Nach 30 min Rühren bei 0-5°C wurde diese Diazotierung zu einer Lösung von 24.2 g 3-Methansulfonylamino-N,N-diethylanilin in 200 ml Eisessig während 30 min bei 0-5°C getropft. Über Nacht wurde bei Raumtemperatur gerührt, auf 3.5 l Wasser ausgetragen und abgesaugt. Nach Waschen mit Wasser und Trocknen erhielt man 34 g (78.5% d. Th.) des Farbstoffs der Formel 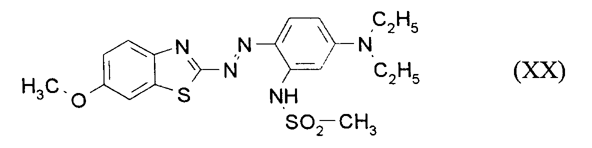 als violettes Pulver.

34 g dieses Farbstoffs wurden in 300 ml Eisessig gelöst und bei 35°C mit 6.6 g Natriumacetat und 15.2 ml Dimethylsulfat versetzt. Nach 11 h bei dieser Temperatur wurden weitere 1.3 g Natriumacetat und 3.0 ml Dimethylsulfat zugesetzt und weitere 15 h gerührt. Es wurde auf 1 l Wasser ausgetragen, mit 350 ml gesättigter Kochsalzlösung ausgesalzen, abgesaugt und mit 250 ml 15-gew.-proz. Kochsalzlösung gewaschen. Nach dem Trocknen erhielt man 42.3 g (94.5% d. Th.) des Farbstoffs der Formel (III) mit R⁹ = Methoxy, R¹⁰ = R¹² = Methyl, R¹¹ = Wasserstoff, R¹³ = R¹⁴ = Ethyl und X⁻ = Methosulfat.

Eine Lösung in Methanol/Eisessig 9:1 zeigte ein Absorptionsmaximum bei 586 nm.

Polyacrylnitrlfaser wurde in einem leicht rotstichigen Blau mit guten Echtheiten gefärbt.

Analog wurden die Farbstoffe der folgenden Tabelle hergestellt:

**Tabelle**

| Beispiel | R⁹ | R¹⁰ | R¹¹ | R¹² | R¹³ | R¹⁴ | X⁻ | λₘₐₓ ^{a)} |
|---|---|---|---|---|---|---|---|---|
| 79 | H | CH₃ | H | CH₃ | C₂H₅ | C₂H₅ | Cl⁻ | 582 nm |
| 80 | H | CH₃ | H | CH₃ | C₃H₇ | C₃H₇ | Cl⁻ | 584 nm |
| 81 | CH₃ | -CH₂CHCH₃ \OH | OCH₃ | C₄H₉ | CH₃ | CH₃ | ZnCl₃⁻ | 605 nm |
| 82 | OCH₃ | CH₃ | H | CH₃ | C₃H₇ | C₃H₇ | CH₃OSO₃⁻ | 589 nm |
| 83 | Cl | -(CH₂)₂CONH₂ | H | C₆H₅ | -(CH₂)₄- | | Cl⁻ | 591 nm |

| | | | | | | | | |
|---|---|---|---|---|---|---|---|---|
| ^{a)} in Methanol/Eisessig 9:1 | | | | | | | | |

### Beispiel 84: (Formel IV)

5.3 g Bis-(4-aminophenyl)-harnstoff wurden in 50 ml Wasser durch Zusatz von 15 ml 30-gew.-proz. Salzsäure teilweise gelöst. Während 1/2 h tropften 10.2 ml einer wäßrigen Natriumnitritlösung (30 g NaNO₂ in 100 ml Lösung). Es wurde 1 h bei Raumtemperatur nachgerührt.

11.7 g Natrium-2-(4-Methoxyanilino)-ethoxysulfat wurden in 80 ml Wasser suspendiert. 10.5 g Calciumchlorid wurden zugesetzt. Während 1 h wurde obige Tetrazotierung zugetropft und dabei der pH durch Einwurf von festem Natriumcarbonat auf 8 gehalten. Danach wurde 1.5 h bei 40-45°C und pH = 8 gerührt. Die orange Suspension wurde abgesaugt, mit 300 ml Wasser angeschlagen und erneut abgesaugt. Nach dem Trocknen erhielt man 21.5 g des Farbstoffs der Formel (IV) mit R¹⁵ = Methoxy, R¹⁶ bis R¹⁹ = Wasserstoff, Z = NHCONH und X⁻ = Hydrogensulfat.

Er zeigte in 50-gew.-proz. Essigsäure ein Absorptionsmaximum bei 442 nm.

Ligninfreies Papier wurde in einem intensiven brillanten Gelb mit guten Abwasserwerten gefärbt.

Analog wurden die Farbstoffe der folgenden Tabelle hergestellt.

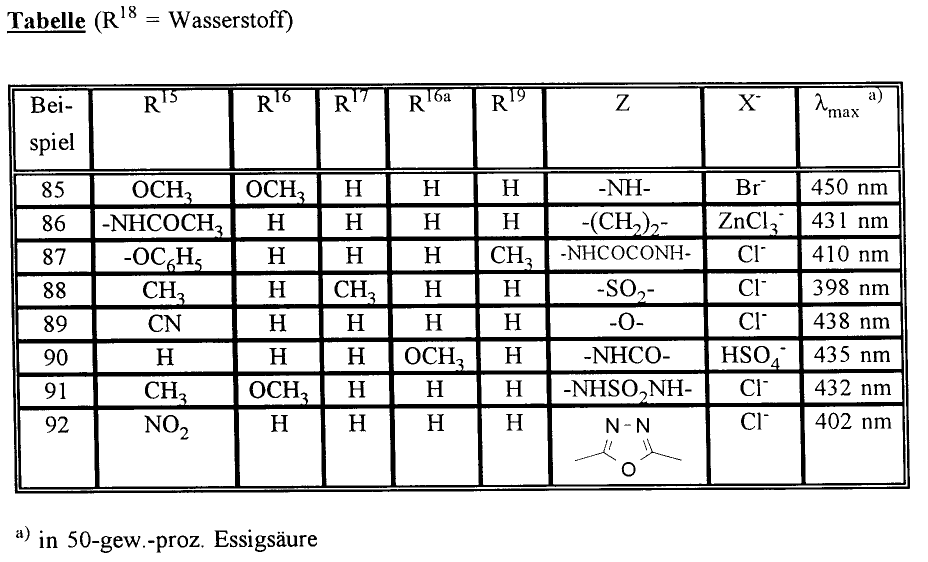

### Beispiel 93: (Formel (V)

Zu einer Lösung von 20.0 g 2-Amino-5-diisopropylamino-1,3,4-thiadiazol und 24.2 g 3-Methansulfonylamino-N,N-diethylanilin in 200 ml Eisessig tropften bei 10-15°C während 90 min 20 ml einer 5-molaren wäßrigen Nartriumacetatlösung. Nach Rühren über Nacht bei Raumtemperatur wurde auf 600 ml Eiswasser ausgetragen, abgesaugt und mit viel Wasser gewaschen. Nach Trocknen erhielt man 35 g (77% d. Th.) des Farbstoffs der Formel 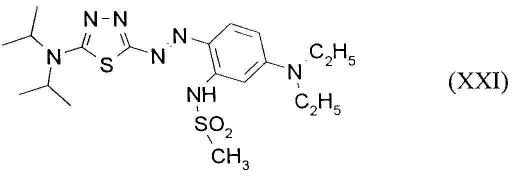 als rotes Pulver.

15 g dieses Farbstoffs wurden in 100 ml Eisessig gelöst und bei 35°C mit 2.7 g Natriumacetat und 6.3 ml Dimethylsulfat versetzt. Nach 18 h bei dieser Temperatur wurde auf 500 ml Wasser ausgetragen. 150 ml 2-molare Zinkchloridlösung und anschließend 450 ml gesättigte Kochsalzlösung wurden zugetropft. Nach Rühren über Nacht wurde abgesaugt, mit 10-gew.-proz. Kochsalzlösung gewaschen und getrocknet. Man erhielt 14.3 g (65% d. Th.) des Farbstoffs der Formel (V) mit R²⁰ = R²¹ = Isopropyl, R²² = R²³ = Methyl, R²⁴ = R²⁵ = Ethyl und X⁻ = ZnCl₃⁻.

Er besaß in Methanol/Eisessig 9:1 ein Absorptionsmaximum bei 590 nm.

Polyacrylnitril färbte er in einem rotstichigen Blau mit guten Echtheiten.

Die Farbstoffe der folgenden Tabelle wurden analog hergestellt:

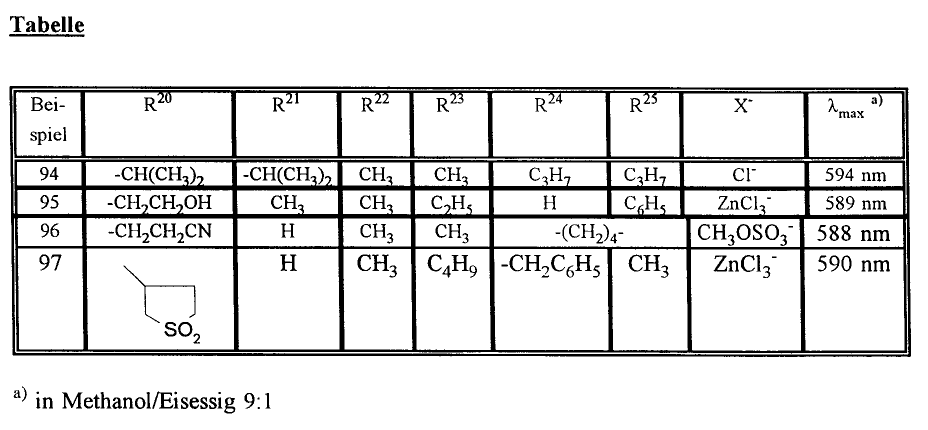

### Beispiel 98: (Formel VI)

20 Teile 2-Amino-5-(diisopropylamino)-1,3,4-thiadiazol wurden bei 0 bis 5°C in einer Mischung aus 50 Teilen Eisessig, 15 Teilen 48 gew.-%iger Schwefelsäure und 5 Teilen 85 gew.-%iger Phosphorsäure mit 34 Teilen 40 gew.-%iger Nitrosylschwefelsäure diazotiert. Nach zweistündigem Rühren wurde die Diazoniumsalzlösung zu einer Lösung von 23 Teilen 1,4-Dimethyl-3-spirocyclopentanchinoxalin-2-on getropft und eine Stunde gerührt. Nach Zusatz von 100 Teilen gesättigter Natriumacetatlösung wurde erneut gerührt und die beginnende Fällung der Farbbase mit konzenrtrierter Natronlauge vervollständigt. Man erhielt 40 Teile Farbbase, die in 100 Teilen Eisessig gelöst wurde. Bei 100°C wurden zu dieser Lösung drei Portionen von je 6 Teilen Propylenoxid durch ein Tauchrohr zugetropft. Nach jeder Portion wurde zwei Stunden bei 100°C gerührt. Nach dem Abkühlen wurde mit 400 Teilen gesättigter Kochsalzlösung ausgefällt Man erhielt 32 Teile eines Farbstoffs der Formel (VI) mit A = Formel (VII), R²⁶ = R²⁷ = Isopropyl, R²⁸ = 2-Hydroxypropyl, R²⁹ = R³⁰ = Methyl, R³¹-R³² = -(CH₂)₄-, R³³ = Wasserstoff und X⁻ = Chlorid.

Eine Lösung in Methanol zeigte ein Absorptionsmaximum von 621 nm.

Der Farbstoff färbte Polyacrylnitril in grünstichig blauer Nuance mit hervorragenden Echtheiten.

Durch Variation der Substituenten an der Diazokomponente und des Alkylierungsmittels, sowie Einsatz entsprechender Kupplungskomponenten erhielt man weitere coloristisch wertvolle Farbstoffe, die der folgenden Tabelle entnommen werden können:

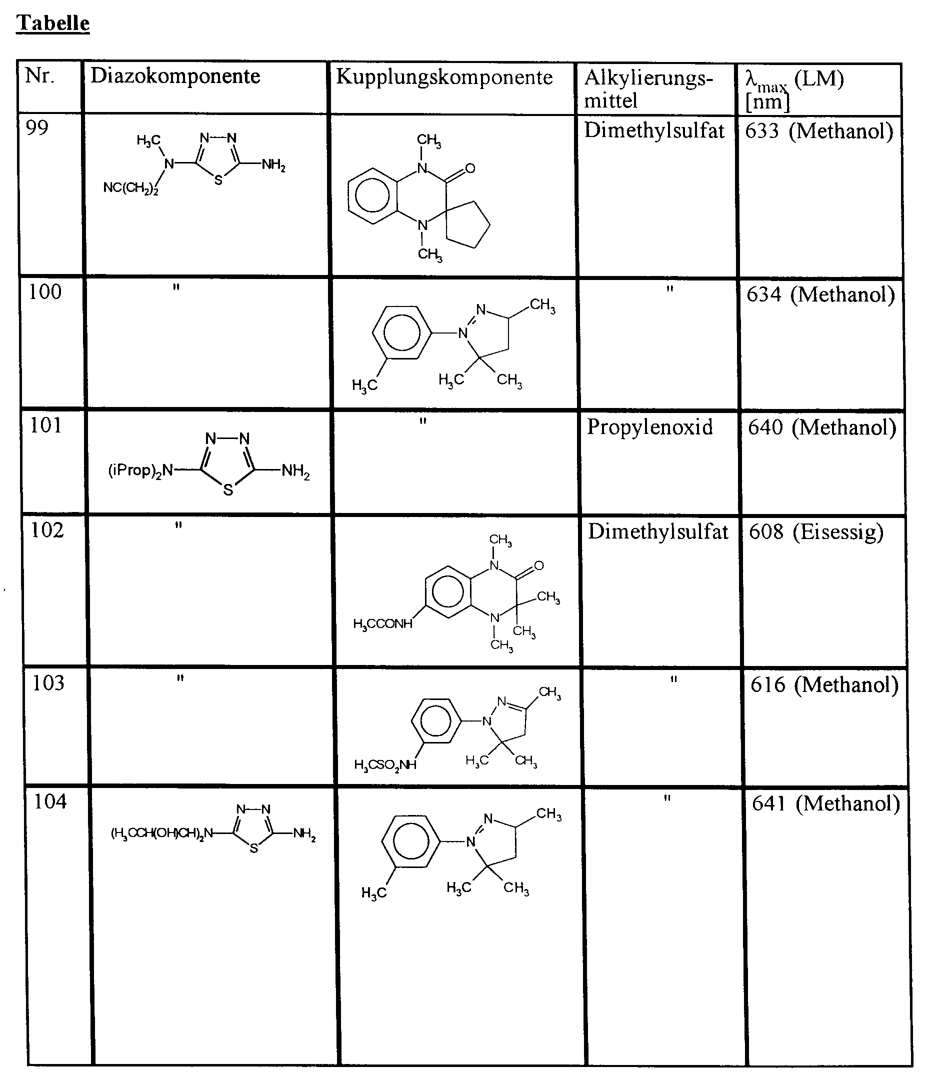

### Beispiel 105 (Formel IX):

6.2 g (25 mmol) 2-Amino-5-N-cyanethyl,N-phenyl-amino-1,3,4-thiadiazol und 3.0 g (25 mmol) N,N-Dimethyl-anilin wurden in 50 ml Essigsäure bei 20°C mit 5 ml (25 mmol) Natriumnitritlösung versetzt und 2 Stunden nachgerührt. Nach Versetzen mit Wasser wurden 7.2 g (19 mmol) roter Azofarbstoff abgesaugt.

Zu diesem wurden in 100 ml Essigsäure 3.3 g (40 mmol) Natriumacetat gegeben. Nach Zutropfen von 3.8 ml (42 mmol) Dimethylsulfat wurde bei 45°C einen Tag nachgerührt, eine weitere Portion von 3.8 ml (42 mmol) Dimethylsulfat nachgesetzt und einen weiteren Tag auf 45°C erwärmt. Austragen auf Wasser, Aussalzen mit gesättigter Kochsalzlösung/gesättigter Zinkchloridlösung, Ausrühren in 7.5 gew.-%-Kochsalzlösung und Reinigung in Methanol/Essigester brachte 3.4 g getrockneten kationischen Farbstoff der Formel (IX) mit R³⁸ = R³⁹ = R⁴² = R⁴³ = Wasserstoff, R⁴⁰ = Cyanethyl, R⁴¹ = R⁴⁴ = R⁴⁵ = Methyl und X⁻ = ZnCl₃⁻ als schwarzes Pulver.

Eine Lösung in Methanol/Eisessig 9:1 besaß ein λₘₐₓ = 600 nm und einen Extinktionskoeffizienten ε = 71000.

Der Farbstoff färbte Polyacrylnitril in einem grünstichig blauen Farbton mit guten Echtheiten.

Ganz analog wurden die Farbstoffe der folgenden Tabelle hergestellt:

**Tabelle**

| (X⁻ = Cl⁻) | | | | | | | | | |
|---|---|---|---|---|---|---|---|---|---|
| Bsp. | R³⁸ | R³⁹ | R⁴⁰ | R⁴¹ | R⁴² | R⁴³ | R⁴⁴ | R⁴⁵ | λₘₐₓ ^{a)} |
| 106 | H | H | C₂H₄CN | Me | H | H | Me | Me | 600nm |
| 107 | H | H | Et | C₂H₄CONH₂ | H | H | C₂H₄CN | Me | 596nm |
| 108 | Me | H | Me | C₂H₄CN | H | H | C₂H₄CN | Et | 601nm |
| 109 | H | CF₃ | Me | C₂H₄COOH | H | H | Me | Me | 603nm |
| 110 | OMe | H | Me | CH₂CH(OH)Me | H | H | C₂H₄SO₂Me | Et | 592nm |
| 111 | OPh | H | C₂H₄CN | C₂H₄CONH₂ | Me | H | Et | Et | 604nm |
| 112 | H | Me | C₂H₄OH | Me | H | H | C₂H₄OH | Et | 602nm |
| 113 | NO₂ | H | Me | C₂H₄CONMe₂ | H | OMe | H | Phenyl | 620nm |
| 114 | H | CN | C₂H₄CN | Me | H | OMe | H | p-Anisidyl | 618nm |
| 115 | CO₂Et | H | Et | C₂H₄CONH₂ | H | H | C₂H₄CN | Me | 603nm |

| | | | | | | | | | |
|---|---|---|---|---|---|---|---|---|---|
| ^{a)} in Methanol/Eisessig 9:1 | | | | | | | | | |

### Beispiel 116: (Formel X)

10 Teile 1-(2-Hydroxypropyl)-2-formylmethylen-3,3-dimethylindolin wurden mit 25 Teilen Phosphoroxychlorid gemischt. Bei anschließender Zugabe von 6 Teilen 2-Methylindolin bildete sich unter Wärmeentwicklung der Farbstoff. Nach Abklingen der exothermen Reaktion wurde noch zwei Stunden bei Raumtemperatur nachgerührt. Die Reaktionsmischung wurde auf Eis ausgetragen und neutralgestellt. Nach Absaugen und Trocknen erhielt man 9.2 Teile des Farbstoffs der Formel (X) mit B = Formel (XI), R⁴⁶ = 2-Hydroxypropyl, R⁴⁷= R⁴⁹ = R⁵⁰ = R⁵¹ = Wasserstoff, R⁴⁸ = Methyl und X⁻ = Cl⁻.

Er besaß in Methanol ein Absorptionsmaximum bei 418 nm.

Der Farbstoff färbte Polyacrylnitril in grünstichig gelber Nuance mit hervorragenden Echtheiten.

Durch Variation der Substituenten an der Aldehydkomponente erhielt man weitere coloristisch wertvolle Farbstoffe:

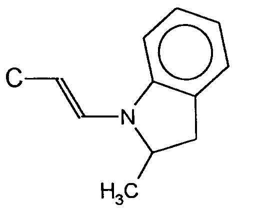

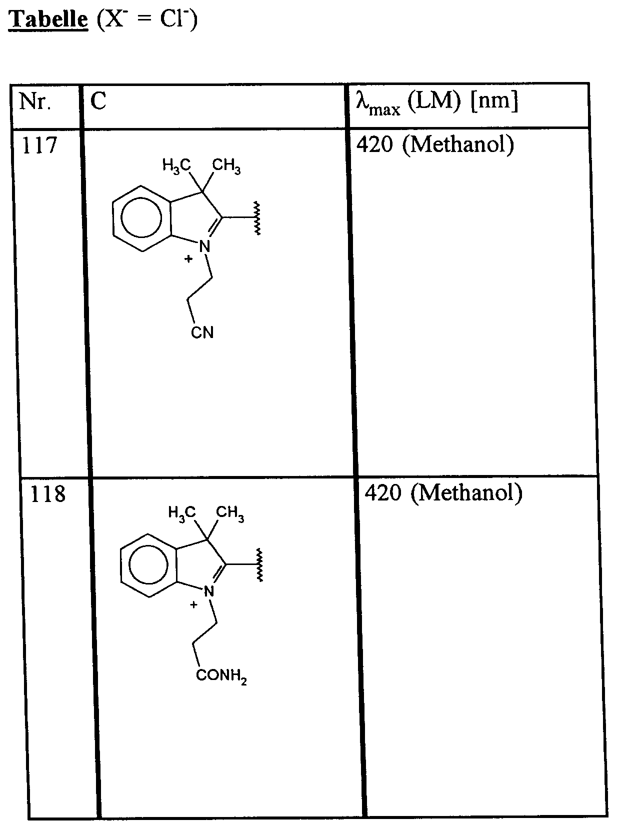

### Beispiel 119: (Formel X)

20.1 Teile Fischeraldehyd und 13.2 Teile 4-Cyanmethylanilin wurden in 250 Teilen Toluol unter Zusatz von 3 Teilen Toluolsulfonsäure sechs Stunden am Wasserabscheider gekocht. Nach dem Erkalten wurden 10 Teile konzentrierte Salzsäure zugesetzt und zur Trockene einrotiert. Nach dem Umlösen aus Methanol und Klären mit Kohle erhielt man 22 Teile des Farbstoffs der Formel (X) mit B = Formel (XII), R⁴⁶ = Methyl, R⁴⁷ = R⁵³ = Wasserstoff, R⁵² = Cyanmethyl und X⁻ = Chlorid.

Der Farbstoff wies eine maximale Absorption bei 436 nm in Methanol auf.

Er färbte Polyacrylnitril mit hervoragenden Echtheiten in goldgelber Nuance.

### Beispiel 120: (Formel X)

Verfuhr man in der gleichen Weise mit 1-(3-Sulfolanyl)-2-formylmethylen-3,3-dimethylindolin und p-Anisidin als Ausgangsmaterialien, so erhielt man in 96 % Ausbeute einen hochechten goldgelben Farbstoff der Formel (X) mit B = Formel (XII), R⁴⁶ = Sulfolan-3-yl, R⁴⁷ = R⁵³ = Wasserstoff, R⁵² = Methoxy und X⁻ = Chlorid.

Er zeigte ein Absorptionsmaximum von 438 nm in Methanol.

### Beispiel 121: (Formel XIII)

12.3 Teile p-Anisidin wurden in 80 Teilen halbkonzentrierter Salzsäure gelöst und mit einer Lösung von 7.2 Teilen Natriumnitrit in 13 Teilen Wasser bei 0°C diazotiert. In diese Lösung wurden 21.6 Teile 1-Aminocarbonylmethyl-2-methylen-3,3-dimethylindolin und 120 Teile 20 gew.-%ige Natriumacetatlösung eingetragen und über Nacht bei Raumtemperatur gerührt. Es wurden 300 Teile gesättigte Natriumacetatlösung zugegeben und nach Ausfallen der Farbbase wurde abgesaugt. 31 Teile dieses Zwischenproduktes wurden in 100 Teilen Chlorbenzol gelöst und mit 50 Teilen konzentrierter Natronlauge, sowie 5 Teilen Triethylbenzylammoniumchlorid versetzt. Bei 60°C wurden dann 20 Teile Dimethylsulfat zugetropft und es wurde vier Stunden bei der gleichen Temperatur nachgerührt. Der in einer Ausbeute von 34 Teilen ausgefallene Farbstoff der Formel (XIII) mit R⁵⁴ = Amidocarbonylmethyl, R⁵⁵ = Wasserstoff, R⁵⁶ = Methoxy und X⁻ = Methosulfat wurde abgesaugt und getrocknet.

Er wies in Methanol ein Absorptionsmaximum von 436 nm auf.

Der Farbstoff färbte Polyacrylnitril in goldgelber Nuance mit hervorragenden Echtheiten.

Durch Variation der Substituenten an der Methylenbase, sowie Einsatz entsprechender Diazokomponenten erhält man weitere coloristisch wertvolle Farbstoffe:

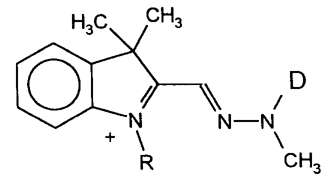

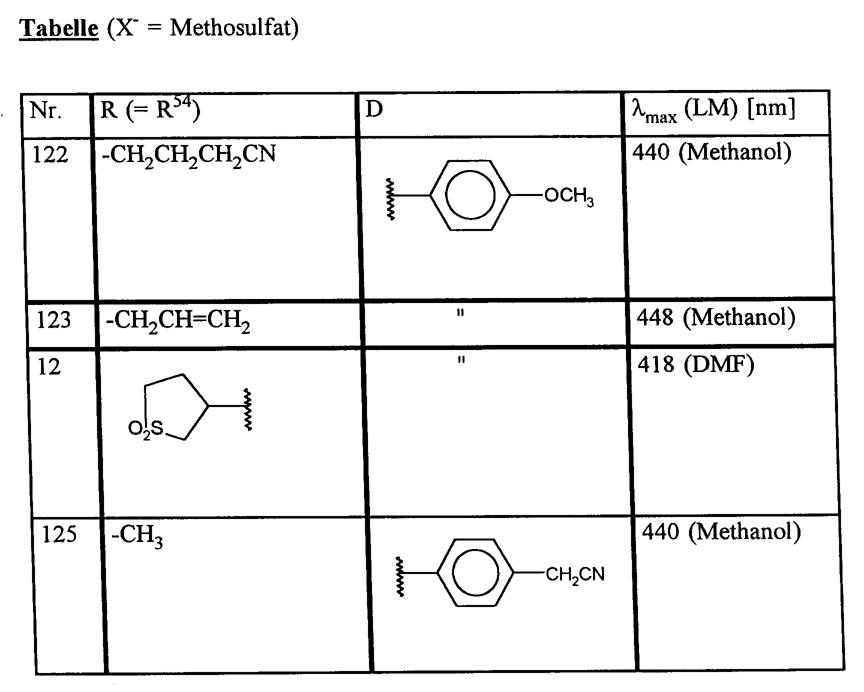

### Beispiel 126: (Formel XIV)

13.7 Teile 2-Amino-5-cyanethyl-1,2,4-triazol wurden in einem Gemisch aus 50 Teilen Eisessig, 15 Teilen 48 gew.-%iger Schwefelsäure und 5 Teilen 85 gew.-%iger Phosphorsäure bei -5°C mit 34 Teilen 40 gew.-%iger Nitrosylschwefelsäure diazotiert und 2 Stunden bei 0°C nachgerührt. Diese Diazotierung wurde zu einer Lösung aus 16 Teilen N-Methyl-N-cyanethylanilin in 100 Teilen Eisessig getropft und 30 Minuten bei Raumtemperatur gerührt. Durch Zugabe von 100 Teilen gesättigter Natriumacetatlösung wurde die Farbbase ausgefällt. Die erhaltenen 15.4 Teile der Vorstufe wurden in 50 Teilen Wasser suspendiert, mit konzentrierter Natronlauge alkalisch gestellt und mit 3 Teilen Magnesiumoxid versetzt. Bei Raumtemperatur wurden dann 18.9 Teile Dimethylsulfat zugetropft und über Nacht gerührt. Nach erneuter Zugabe von 6.6 g Dimethylsulfat wurde 8 Stunden gerührt und mit Zinkchlorid ausgefällt. Man erhielt 9.8 Teile des Farbstoffs der Formel (XIV) mit R⁵⁷ = R⁵⁸ = R⁵⁹ = Methyl, R⁶⁰ = 2-Cyanethyl, R⁶¹ = Wasserstoff, p = 1 und X⁻ = ZnCl₃⁻.

Der Farbstoff wies eine Absorptionswellenlänge von 522 nm in Dimethylformamid auf.

Er färbte Polyacrylnitril in brillanter roter Nuance mit hervorragenden Echtheiten.

### Beispiel 127: (Formel XIV)

Einen ähnlich wertvollen Farbstoff erhielt man, wenn statt N-Methyl-N-cyanethylanilin Diethylanilin Verwendung fand. Das Absorptionsmaximum des so erhaltenen Farbstoffs mit R⁵⁷ = R⁵⁸ = Methyl, R⁶⁰ = R⁶¹ = Ethyl, R⁶¹ = Wasserstoff, p = 1 und X⁻ = ZnCl₃⁻ lag in Methanol bei 540 nm.

### Beispiel 128: (Färben von Polyacrylnitril)

0.1 g des kationischen Farbstoffs des Beispiels 25 wurden in 2 ml Wasser unter Zusatz von wenig Essigsäure angeteigt und mit 50 ml heißem Wasser gelöst. Dann wurden 1.2 g eines Kondensationsprodukts aus Naphthalinsulfonsäure und Formaldehyd zugesetzt und mit kaltem Wasser auf 500 ml aufgefüllt.

Der pH-Wert dieser Färbeflotte wurde mit Essigsäure und Natriumacetat auf 4.5 bis 5 eingestellt. In dieser Färbeflotte wurden 10 g Stückware aus Polyacrylnitrilfasern ständig in Bewegung gehalten, während in 30 min die Temperatur auf 100°C erhöht wurde. Bei Kochtemperatur wurde 60 min gefärbt, dann das Material mit kaltem Wasser gespült und bei 60 - 70°C getrocknet.

Man erhielt ein intensiv neutral blau gefärbtes Stoffstück mit guten coloristischen Echtheiten. Analog ließen sich die Farbstoffe der Beispiele 4 bis 24, 26 bis 48, 55 bis 66, 78 bis 83 und 93 bis 127 verwenden.

### Beispiel 129: (Färben von holzschliffhaltigem Papier)

Ein aus 60 % Holzschliff und 40 % ungebleichtem Sulfitzellstoff bestehender Trockenstoff wurde im Holländer mit soviel Wasser angeschlagen und bis zum Mahlgrad 40° SR gemahlen, daß der Trockengehalt etwas über 2.5 % lag. Anschließend wurde mit Wasser exakt 2.5 % Trockengehalt des Dickstoffs eingestellt. 200 g dieses Dickstoffs wurden mit 5 g einer 0.5 gew.-proz. wäßrigen Lösung des Farbstoffs des Beispiels 2 versetzt, 5 min verrührt, 2 % Harzleim und 4 % Alaun, bezogen auf Trockenstoff, hinzugegeben und wiederum einige Minuten homogen verrührt. Dann wurde die Masse mit Wasser auf 700 ml verdünnt und hieraus in bekannter Weise durch Absaugen über einen Blattbildner Papierblätter hergestellt. Sie wiesen eine intensive grünstichig gelbe Färbung auf.

Analog ließen sich die Farbstoffe der Beispiele 1, 3, 5, 6, 19, 21, 30 bis 36, 49 bis 53, 67 bis 83 und 93 bis 97 verwenden.

### Beispiel 130: (Färben von holzschlifffreiem Papier)

5 g einer Mischung aus 70 Gew.-% Birkenholzsulfat-Zellstoff und 30 Gew.-% Kiefernholzsulfat-Zellstoff wurden in 395 ml Wasser in einem Laborholländer auf 30 bis 40° SR gemahlen. Diese Mischung wurde auf 1 l mit Wasser aufgefüllt. Hierzu wurde eine Lösung von 25 ml des Farbstoffs des Beispiels 84 in 2.5 ml Wasser, 10 ml einer 1 gew.-proz. wäßrigen Lösung von Harzleim Dynacoll VS 50 der Fa. Akzo Chemie, Düren, und 15 ml einer 1 gew.-proz. wäßrigen Lösung von Aluminiumsulfat gegeben, wobei zwischen den Zugaben 8 Minuten gerührt wurde.

Die gefärbte und geleimte Papiermasse wurde auf einen Laborblattbildner gegeben, gleichmäßig verteilt und abgesaugt. Anschließend wurde das gelb gefärbte Papierblatt zwischen Filterpapier gepreßt und getrocknet.

Ganz analog konnten die Farbstoffe der Beispiele 85 bis 92 eingesetzt werden.

### Beispiel 131: (Formel XV)

11.2 g des Farbstoffs des Beispiels 78 wurden in 100 ml Methanol gelöst. 20 ml 10-gew.-proz. Natronlauge wurden zugetropft. Es bildete sich eine violette Suspension, die abgesaugt und mit Methanol und Wasser gewaschen wurde. Nach dem Trocknen erhielt man 6.5 g (73 % d. Th.) des Farbstoffs der Formel (XV) mit R⁹ = Methoxy, R¹⁰ = R¹² = Methyl, R¹¹ = Wasserstoff und R¹³ = R¹⁴ = Ethyl als violettes Pulver.

Eine Lösung in Dimethylformamid besaß ein Absorptionsmaximum bei 531 nm.

Analog wurden die Farbstoffe der beiden folgenden Tabellen hergestellt:

**Tabelle**

| **(Anhydrobasen der Formel XV)** | | | | | | | |
|---|---|---|---|---|---|---|---|
| Beispiel | R⁹ | R¹⁰ | R¹¹ | R¹² | R¹³ | R¹⁴ | λₘₐₓ ^{a)} |
| 132 | H | CH₃ | H | CH₃ | C₂H₅ | C₂H₅ | 527 nm |
| 133 | H | CH₃ | H | CH₃ | C₃H₇ | C₃H₇ | 529 nm |
| 134 | CH₃ | -CH₂CHCH₃ \OH | OCH₃ | C₄H₉ | CH₃ | CH₃ | 550 nm |
| 135 | OCH₃ | CH₃ | H | CH₃ | C₃H₇ | C₃H₇ | 533nm |
| 136 | Cl | -(CH₂)₂CONH₂ | H | C₆H₅ | -(CH₂)₄- | | 534 nm |

| | | | | | | | |
|---|---|---|---|---|---|---|---|
| ^{a)} in Dimethylformamid | | | | | | | |

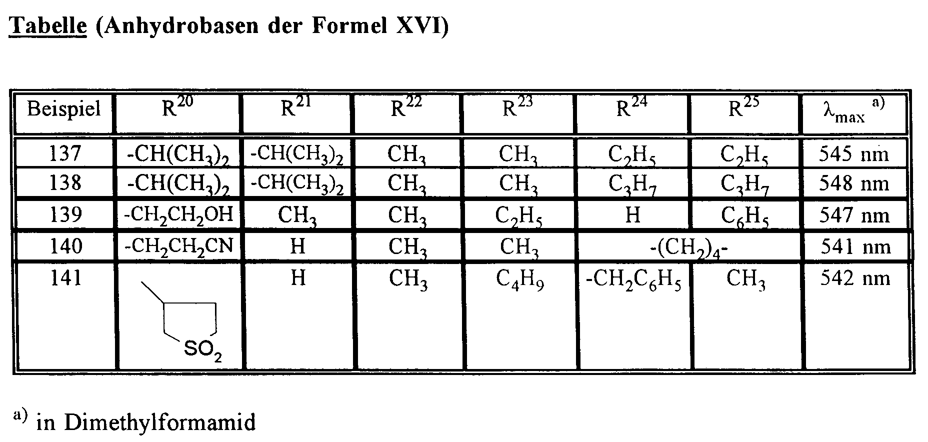

### Beispiel 142: (Transferdruck)

Mit einer 2-Gew.proz. Lösung des Farbstoffs des Beispiels 131 wurde ein Filterpapierstreifen getränkt und getrocknet. Dieser Papierstreifen wurde nun auf die beschichtete Seite eines handelsüblichen CF-Papiers für kohlefreie Durchschreibepapiere gelegt, dessen Nehmerschicht aus aktiviertem Ton bestand (Reacto®, Fa. Köhler). Das Filterpapier wurde mit einem heißen Glasstab beschrieben. Dabei wurde der Farbstoff auf das Nehmerpapier übertragen und ergab dort eine intensive, rotstichig blaue Markierung.

## Patentansprüche

1. Verfahren zum Reduzieren der Toxizität von Restflotten aus dem Färben mit kationischen Farbstoffen oder Mischungen davon, dadurch gekennzeichnet, daß man mit kationischen Farbstoffen färbt, die eine berechnete elektrostatische Abschirmungsenergie (idealisierte Hydratationsenergie) von ≧50 kcal/mol aufweisen.

2. Verfahren gemäß Anspruch 1, dadurch gekennzeichnet, daß man als kationische Farbstoffe solche einsetzt, die mindestens zwei hydrophile Reste tragen.

3. Kationische Farbstoffe der Formel 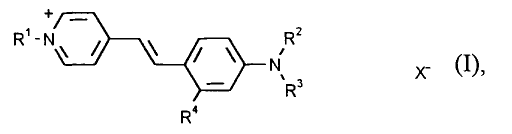 worin
R¹ und R³ unabhängig voneinander -(CH₂)ₙ-N(C₁- bis C₄-alkyl)₂, Hydroxy-C₂- bis -C₆-alkyl, Acetoxy-C₂- bis -C₆-alkyl, Cyano-C₂- bis -C₆-alkyl, Amidocarbonyl-C₂- bis -C₆-alkyl, -(CH₂)ₙ-O-(CH₂)ₘ-OH oder -(CH₂)ₙ-O-(CH₂)ₘ-OCOCH₃ bedeuten,
R² C₁- bis C₆-Alkyl, Benzyl oder Phenethyl bedeutet oder die Bedeutung von R³ besitzt,
R⁴ Wasserstoff oder C₁- bis C₆-Alkyl bedeutet,
n und m unabhängig 2, 3 oder 4 bedeuten und
X⁻ ein Anion bedeutet.

4. Kationische Farbstoffe der Formel 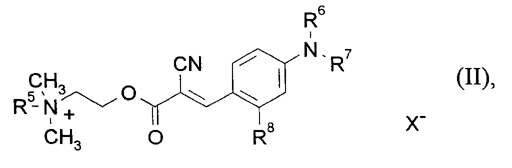 worin
R⁵ C₁- bis C₆-Alkyl, Hydroxy-C₂- bis -C₆-alkyl, Acetoxy-C₂- bis -C₆-alkyl, -(CH₂)ₙ-O-(CH₂)ₘ-OH oder -(CH₂)ₙ-O-(CH₂)ₘ-OCOCH₃ bedeutet,
R⁶ C₁- bis C₆-Alkyl, Benzyl oder Phenethyl bedeutet oder die Bedeutung von R⁷ besitzt,
R⁷ -(CH₂)ₙ-N(C₁- bis C₄-alkyl)₂, Hydroxy-C₂- bis -C₆-alkyl, Amidocarbonyl-C₂- bis -C₆-alkyl oder -(CH₂)ₙ-O-(CH₂)ₘ-OH bedeutet,
R⁸ Wassserstoff oder C₁- bis C₆-Alkyl bedeutet,
n und m unabhängig voneinander 2, 3 oder 4 bedeuten und
X⁻ ein Anion bedeutet.

5. Kationische Farbstoffe der Formel 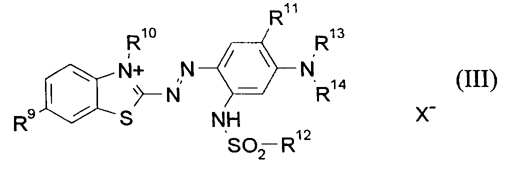 worin
R⁹ und R¹¹ unabhängig voneinander Wasserstoff, Halogen, C₁- bis C₆-Alkyl oder C₁- bis C₆-Alkoxy bedeuten,
R¹⁰ gegebenenfalls durch Halogen, Cyano, Hydroxy, C₁- bis C₄-Alkoxy oder Phenyl substituiertes C₁- bis C₆-Alkyl bedeutet,
R¹² gegebenenfalls durch Halogen, Cyano, Hydroxy, C₁- bis C₄-Alkoxy oder Phenyl substituierte C₁- bis C₆-Alkyl-, C₄- bis C₇-Cycloalkyl- oder Phenylreste bedeutet,
R¹³ und R¹⁴ unabhängig voneinander Wasserstoff, gegebenenfalls durch Halogen, Cyano, Hydroxy, C₁- bis C₄-Alkoxy oder Phenyl substituierte C₁- bis C₆-Alkyl-, C₄- bis C₇-Cycloalkyl- oder Phenylreste bedeuten oder
NR¹³R¹⁴ Pyrrolidino, Piperidino oder Morpholino bedeutet und
X⁻ ein Anion bedeutet.

6. Kationische Farbstoffe der Formel 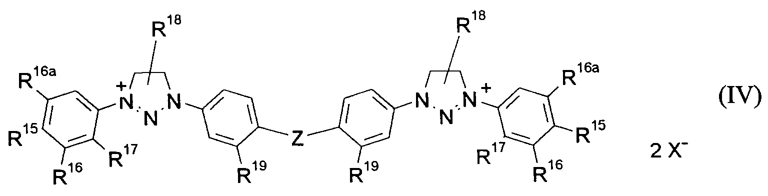 worin
R¹⁵, R¹⁶, R^{16a} und R¹⁷ unabhängig voneinander Wasserstoff, Halogen, C₁- bis C₆-Alkyl, C₁- bis C₆-Alkoxy, Phenoxy, C₁- bis C₆-Alkanoylamino, Benzoylamino, C₁- bis C₆-Alkansulfonylamino, Benzolsulfonylamino, Cyano oder Nitro bedeuten,
R¹⁸ Wasserstoff oder C₁- bis C₆-Alkyl bedeutet,
R¹⁹ Wasserstoff, Methyl oder Methoxy bedeutet,
Z eine Brücke der Formeln -(CH₂)ₘ-, O, NH, SO₂, NHCO, NHCONH, NHSO₂NH, NHCOCONH oder 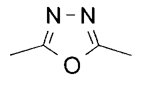 bedeutet,
m 1, 2 oder 3 bedeutet und
X⁻ ein Anion bedeutet.

7. Kationische Farbstoffe der Formel 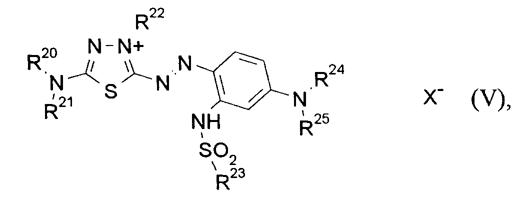 worin
R²⁰, R²¹, R²⁴ und R²⁵ unabhängig voneinander ggf. durch Hydroxy, Cyano oder Methoxy substituiertes C₁- bis C₆-Alkyl, Benzyl, ggf. durch Methyl, Methoxy oder Cyano substituiertes Phenyl oder Tetramethylensulfonyl bedeuten und
R²⁰ und R²⁴ unabhängig voneinander zusätzlich Wasserstoff bedeuten können oder
NR²⁰R²¹ und NR²⁴R²⁵ unabhängig voneinander Pyrrolidino, Piperidino oder Morpholino bedeuten können,
R²² und R²³ unabhängig voneinander C₁- bis C₆-Alkyl bedeuten und
X⁻ ein Anion bedeutet.

8. Kationische Farbstoffe der Formel. 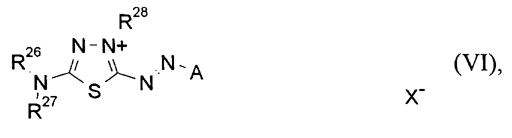 wobei
A für eine Struktur der Formel 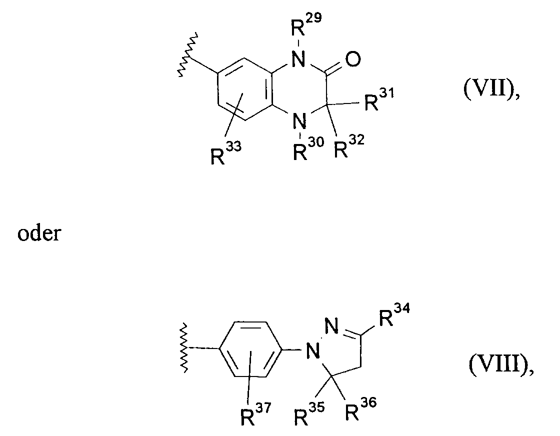
steht,
worin
R²⁶ und R²⁷ unabhängig voneinander gegebenenfalls durch OH, CN oder CONH₂ substituiertes C₁- bis C₄-Alkyl bedeuten,
R²⁸ einen gegebenenfalls verzweigten C₁- bis C₄-Alkyl-, Cyano-C₁- bis -C₄-Alkyl-, Hydroxy-C₁- bis -C₄-Alkyl-, Amido-C₁- bis -C₄-Alkyl-, C₁- bis C₄-Alkoxycarbonyl-C₁- bis -C₄-Alkyl-, Benzyl-, Phenethyl- oder Pyridylethylrest bedeutet,
R²⁹ und R³⁰ unabhängig voneinander Wasserstoff, C₁- bis C₄-Alkyl, C₇- bis C₉-Aralkyl oder C₄- bis C₇-Cycloalkyl bedeuten,
R³¹ und R³² unabhängig voneinander Wasserstoff, C₁- bis C₄-Alkyl, C₆-bis C₁₀-Aryl, C₇- bis C₉-Aralkyl oder C₄- bis C₇-Cycloalkyl bedeuten oder
gemeinsam mit dem sie verbindenden C-Atom einen 5-, 6- oder mehrgliedrigen Ring bilden können,
R³³ einen oder mehrere C₁- bis C₄-Alkyl-, C₁- bis C₄-Alkoxy-, C₇- bis C₉-Aralkyl-, C₄- bis C₇-Cycloalkyl-, Halogen-, C₁- bis C₄-Alkylcarbonylamino- oder C₁- bis C₄-Alkylsulfonylaminoreste bedeutet,
R³⁶ C₁- bis C₄-Alkyl bedeutet,
R³⁴ und R³⁵ unabhängig voneinander C₁- bis C₄-Alkyl oder C₆- bis C₁₀-Aryl bedeuten,
R³⁷ einen oder mehrere C₁- bis C₄-Alkyl-, Chlor-, Brom-, C₁- bis C₄-Alkoxy-, C₁- bis C₄-Alkoxycarbonyl- oder C₁- bis C₄-Acylaminoreste bedeutet und
X⁻ ein Anion bedeutet.

9. Kationische Farbstoffe der Formel 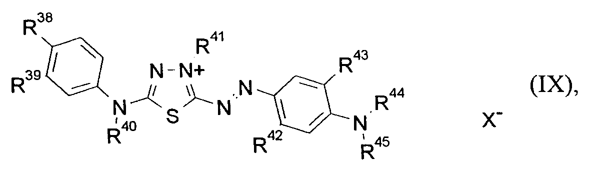 worin
R³⁸ und R³⁹ unabhängig voneinander Wasserstoff, C₁- bis C₆-Alkyl, C₁- bis C₄- Perfluoralkyl, Halogen, Nitro, Cyano, C₁- bis C₄-Alkoxy-, C₆- bis C₁₀- Aryloxy, C₁- bis C₄-Alkylcarbonyl, C₁- bis C₄-Dialkylamino, Aminocarbonyl, C₁- bis C₄-Alkylcarbonylamino, C₁- bis C₄-Alkoxycarbonyl, C₁- bis C₄-Alkylsulfonyl oder C₆- bis C₁₀-Arylsulfonyl bedeuten.
R⁴⁰ und R⁴¹ unabhängig voneinander ggf. mit Cyano, Hydroxy, Aminocarbonyl, C₁- bis C₄-Mono- oder Dialkylaminocarbonyl, C₁- bis C₄-Alkoxycarbonyl oder Carboxyl substituiertes C₁- bis C₆-Alkyl bedeuten, wobei R⁴⁰ und R⁴¹ nicht gleichzeitig unsubstituiertes C₁- bis C₆-Alkyl sein dürfen,
R⁴² und R⁴³ unabhängig voneinander Wasserstoff C₁- bis C₆-Alkyl C₁- bis C₄- Perfluoralkyl, Halogen, Nitro, Cyano, C₁- bis C₄-Alkoxy-, C₆- bis C₁₀-Aryloxy, C₁- bis C₄-Alkylcarbonyl oder C₁- bis C₄-Alkoxycarbonyl bedeuten,
R⁴⁴ und R⁴⁵ unabhängig voneinander ggf. mit Cyano, Hydroxy, Aminocarbonyl, C₁- bis C₄- Mono- oder Dialkylaminocarbonyl, C₁- bis C₄-Alkoxycarbonyl, Carboxyl, C₁- bis C₄-Alkylsulfonyl substituiertes C₁- bis C₆-Alkyl oder gegebenenfalls mit Wasserstoff, C₁- bis C₆-Alkyl, C₁- bis C₄-Perfluoralkyl, Halogen, Nitro, Cyano, C₁- bis C₄-Alkoxy, C₆- bis C₁₀- Aryloxy, C₁- bis C₄-Alkylcarbonyl, C₁- bis C₄-Dialkylamino, Aminocarbonyl, C₁- bis C₄- Alkoxycarbonyl, C₁- bis C₄-Alkylsulfonyl oder C₆- bis C₁₀-Arylsulfonyl substituiertes C₆- bis C₁₀-Aryl bedeuten und
X⁻ ein Anion bedeutet.

10. Kationische Farbstoffe der Formel 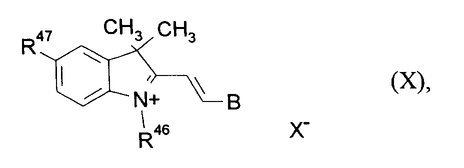 wobei B für eine Struktur der Formeln 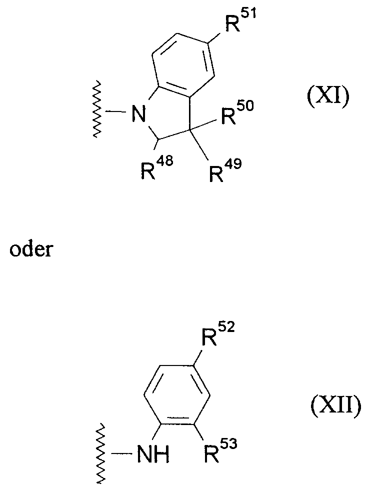 steht, worin
R⁴⁶ einen gegebenenfalls verzweigten Cyano-C₁- bis -C₄-Alkyl-, Hydroxy-C₁- bis -C₄-Alkyl-, Amido-C₁- bis -C₄-Alkyl-, C₁- bis C₄-Alkoxycarbonyl-C₁- bis -C₄-Alkyl-Rest oder einen 3-Sulfolanylrest bedeutet oder,
wenn B für die Formel (XII) steht und R⁵² und/oder R⁵³ ein durch OH, CN oder CONH₂ substituierten C₁- bis C₄-Alkyl bedeuten, zusätzlich einen C₁- bis C₄-Alkylrest bedeuten kann,
R⁴⁷ Wasserstoff, C₁- bis C₄-Alkyl, C₁- bis C₄-Alkoxy oder Halogen bedeutet,
R⁴⁸, R⁴⁹ und R⁵⁰ unabhängig voneinander Wasserstoff oder C₁- bis C₄-Alkyl bedeuten,
R⁵¹ Wasserstoff, C₁- bis C₄-Alkyl, C₁- bis C₄-Alkoxy oder Halogen bedeutet,
R⁵² und R⁵³ unabhängig voneinander Wasserstoff, gegebenenfalls durch OH, CN oderCONH₂ substituiertes C₁- bis C₄-Alkyl, C₁- bis C₄-Alkoxy oder Halogen bedeuten und
X⁻ ein Anion bedeutet.

11. Kationische Farbstoffe der Formel 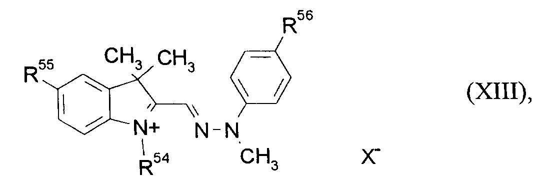 worin
R⁵⁴ einen gegebenenfalls verzweigten und durch CN oder CONH₂ substituierten C₁- oder C₃-Alkylrest, einen Allylrest oder einen 3-Sulfolanylrest bedeutet oder,
wenn R⁵⁶ durch OH, CN oder CONH₂ substituiertes C₁- bis C₄-Alkyl darstellt, zusätzlich einen gegebenenfalls verzweigten und gegebenenfalls durch OH, CN oder CONH₂ substituierten C₁- bis C₄-Alkylrest bedeuten kann,
R⁵⁵ Wasserstoff C₁- bis C₄-Alkyl, C₁- bis C₄-Alkoxy oder Halogen bedeutet,
R⁵⁶ Wasserstoff einen gegebenenfalls verzweigten C₁- bis C₄-Alkyl-, C₁- bis C₄-Alkoxy-, Cyano-C₁- bis C₄-Alkyl-, Hydroxy-C₁- bis C₄-Alkyl- oder Amido-C₁- bis C₄-Alkylrest bedeutet und
X⁻ ein Anion bedeutet.

12. Kationische Farbstoffe der Formel 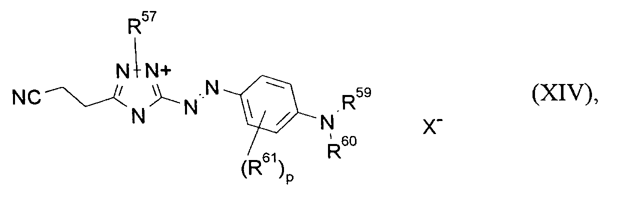 worin
R⁵⁷ und R⁵⁸ unabhängig voneinander einen gegebenenfalls durch OH, CN oder CONH₂substituierten C₁- bis C₄-Alkylrest, Benzyl oder Phenethyl bedeuten,
R⁵⁹ und R⁶⁰ unabhängig voneinander Wasserstoff, einen gegebenenfalls verzweigten C₁- bis C₄-Alkyl-, Cyano-C₁- bis -C₄-Alkyl-, Hydroxy-C₁- bis -C₄-Alkyl-, Amido-C₁- bis -C₄-Alkyl -, C₁- bis C₄-Alkoxycarbonyl-C₁- bis -C₄-Alkylrest, Benzyl, Phenethyl oder einen gegebenenfalls durch Methyl, Methoxy, Acetylamino oder Chlor substituierten Phenylrest bedeuten oder
NR⁵⁹R⁶⁰ Pyrrolidino, Piperidino oder Morpholino bedeutet,
R⁶¹ Wasserstoff C₁- bis C₄-Alkyl, C₁- bis C₄-Alkoxy, C₆-Aryl, C₅- bis C₇-Cycloalkyl, Halogen, C₁- bis C₄-Alkylcarbonylamino oder C₁- bis C₄-Alkylsulfonylamino bedeutet,
p 1 oder 2 bedeutet und
X⁻ ein Anion bedeutet.

13. Anhydrobasen der Formeln 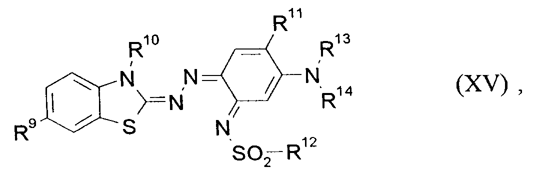 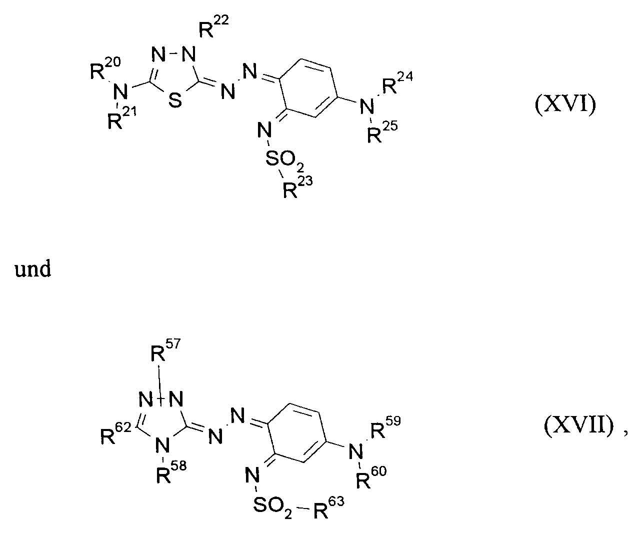 worin
R⁹ bis R¹⁴, R²⁰ bis R²⁵ und R⁵⁷ bis R⁶⁰ die in Anspruch 5, 7 bzw. 12 angegebene Bedeutung besitzen und
R⁶² Wasserstoff oder Cyanethyl bedeutet und
R⁶³ C₁- bis C₄-Alkyl bedeutet.
